# EUROPÄISCHE PATENTSCHRIFT

(11) **EP 2 024 714 B1**
(45) Veröffentlichungstag und Bekanntmachung des Hinweises auf die Patenterteilung: **03.07.2019**
(21) Anmeldenummer: 07729764.6
(22) Anmeldetag: 31.05.2007
(51) Int. Cl.: G01F 1/58

(54) **IN-LINE-MESSGERÄT MIT EINEM INNEN MIT POLYURETHAN AUSGEKLEIDETEM MESSROHR UND VERFAHREN ZU DESSEN HERSTELLUNG**
IN-LINE MEASURING DEVICE HAVING A MEASURING TUBE, THE INTERIOR OF WHICH IS LINED WITH POLYURETHANE, AND METHOD FOR THE PRODUCTION THEREOF
APPAREIL DE MESURE EN LIGNE AVEC UN TUBE DE MESURE RECOUVERT À L'INTÉRIEUR DE POLYURÉTHANE ET SON PROCÉDÉ DE FABRICATION

(30) Priorität: 02.06.2006 DE 102006026311
(43) Veröffentlichungstag der Anmeldung: 18.02.2009
(73) Patentinhaber: Endress+Hauser Flowtec AG, 4153 Reinach (CH)
(72) Erfinder: RUCHEL, Johannes, 4144 Arlesheim (CH); SULZER, Thomas, 79639 Grenzach-Wyhlen (DE); STÜNZI, Alexander, 4107 Ettingen (CH)
(74) Vertreter: Andres, Angelika Maria
(86) Internationale Anmeldenummer: PCT/EP2007/055363
(87) Internationale Veröffentlichungsnummer: WO 2007/141195

(56) Entgegenhaltungen:
- WO-A-2006/067077
- WO-A-2007/033901
- JP-A- 63 085 408
- JP-A- H05 220 451
- US-A- 4 774 844
- US-A- 5 776 548
- KROHNE: "IFS 4000 KC (ENVIROMAG)" INTERNET ARTICLE, [Online] Mai 2004 (2004-05), XP002450041 Gefunden im Internet: URL:HTTP://WWW.INSTRUMART.COM/ASSETS/108/D A_IFC_ENVIROMAG_US.PDF> [gefunden am 2007-09-07]

## Beschreibung

Die Erfindung betrifft ein In-Line-Meßgerät, insb. ein Durchflußmeßgerät, zum Messen eines in einer Rohrleitung strömenden Fluids, wobei das In-Line-Meßgerät einen, insb. magnetisch-induktiven, Meßaufnehmer mit einem in den Verlauf der Rohrleitung eingefügten, innen mit einem Liner ausgekleideten Meßrohr zum Führen des zu messenden Fluids umfaßt, und wobei der Liner aus einem Polyurethan besteht, das unter Verwendung eines metall-organische Verbindungen aufweisenden Katalysators hergestellt ist. Ferner betrifft die Erfindung ein Verfahren zur Herstellung des vorgenannten In-Line-Meßgeräts.

Mittels In-Line-Meßgeräten mit einem magnetisch-induktiven Meßaufnehmer lassen sich bekanntlich die Strömungsgeschwindigkeit und/oder der Volumendurchfluß eines elektrisch leitfähigen Fluids messen, das ein Meßrohr des Meßaufnehmers in einer Strömungsrichtung durchströmt. Hierzu wird im magnetisch-induktiven Meßaufnehmer mittels zumeist einander diametral gegenüberliegende Feldspulen einer an eine Erreger-Elektronik des In-Line-Meßgeräts elektrisch angeschlossenen Magnetkreisanordnung ein Magnetfeld erzeugt, das das Fluid innerhalb eines vorgegebenen Meßvolumens zumindest abschnittsweise senkrecht zur Strömungsrichtung durchsetzt und das sich im wesentlichen außerhalb des Fluids rückschließt. Das Meßrohr besteht dabei zumeist aus nichtferromagnetischem Material, damit das Magnetfeld beim Messen nicht ungünstig beeinflußt wird. Infolge der Bewegung der freien Ladungsträger des Fluids im Magnetfeld wird nach dem magneto-hydrodynamischen Prinzip im Meßvolumen ein elektrisches Feld erzeugt, das senkrecht zum Magnetfeld und senkrecht zur Strömungsrichtung des Fluids verläuft. Mittels wenigstens zweier in Richtung des elektrischen Feldes voneinander beabstandet angeordneter Meßelektroden und mittels einer an diese angeschlossenen Auswerte-Elektronik des In-Line-Meßgeräts ist somit eine im Fluid induzierte elektrische Spannung meßbar, die wiederum ein Maß für den Volumendurchfluß ist. Zum Abgreifen der induzierten Spannung können beispielsweise das Fluid berührende, galvanische oder das Fluid nicht berührende, kapazitive Meßelektroden dienen. Zum Führen und Einkoppeln des Magnetfeldes in das Meßvolumen umfaßt die Magnetkreisanordnung üblicherweise von den Feldspulen umhüllte Spulenkerne, die entlang eines Umfanges des Meßrohrs insb. diametral, voneinander beabstandet und mit jeweils einer freien endseitigen Stirnfläche, insb. spiegelbildlich, zueinander angeordnet sind. Im Betrieb wird somit das mittels der an die Erreger-Elektronik angeschlossenen Feldspulen erzeugte Magnetfeld über die Spulenkerne so in das Meßrohr eingekoppelt, daß es das zwischen beiden Stirnflächen hindurchströmende Fluid wenigstens abschnittsweise senkrecht zur Strömungsrichtung durchsetzt.

Als Alternative zu In-Line-Meßgeräten mit magnetisch-induktiven Meßaufnehmern werden zur Messung von Strömungsgeschwindigkeiten und/oder Volumendurchflüssen strömender Fluide oftmals auch mittels Ultraschall akustisch messende In-Line-Meßgeräten mit einem entsprechende Ultraschall-Sender und -Empfänger aufweisenden Meßrohr verwendet.

Aufgrund der geforderten hohen mechanischen Stabilität für solche Meßrohre, bestehen diese - sowohl bei magnetisch-induktiv als auch für akustisch messenden Meßaufnehmern - zumeist aus einem äußeren metallischen Trägerrohr von vorgebbarer Festigkeit und Weite, das innen mit einem elektrisch nicht leitenden Isoliermaterial von vorgebbarer Dicke, dem sogenannten Liner, beschichtet ist. Beispielsweise sind in der US-B 65 95 069, der US-A 56 64 315, der US-A 52 80 727, der US-A 46 79 442, der US-A 42 53 340, der US-A 32 13 685 oder der JP-Y 53 - 51 181 jeweils magnetisch-induktive Meßaufnehmer beschrieben, die ein in eine Rohrleitung fluiddicht einfügbares, ein einlaßseitiges erstes Ende und ein auslaßseitiges zweites Ende aufweisendes Meßrohr mit einem nicht-ferromagnetischen Trägerrohr als eine äußere Umhüllung des Meßrohrs, und einem in einem Lumen des Trägerrohrs untergebrachten, aus einem Isoliermaterial bestehenden rohrförmigen Liner zum Führen eines strömenden und vom Trägerrohr isolierten Fluids umfassen.

Der üblicherweise aus einem thermoplastischen, duroplastischen oder elastomeren Kunststoff bestehende Liner dient der chemischen Isolierung des Trägerrohrs vom Fluid. Bei magnetisch-induktiven Meßaufnehmern, bei denen das Trägerrohr eine hohe elektrische Leitfähigkeit aufweist, beispielsweise bei Verwendung metallischer Trägerrohre, dient der Liner außerdem als elektrische Isolierung zwischen dem Trägerrohr und dem Fluid, die ein Kurzschließen des elektrischen Feldes über das Trägerrohr verhindert. Durch eine entsprechende Auslegung des Trägerrohrs ist insoweit also eine Anpassung der Festigkeit des Meßrohrs an die im jeweiligen Einsatzfall vorliegenden mechanischen Beanspruchungen realisierbar, während mittels des Liners eine Anpassung des Meßrohr an die für den jeweiligen Einsatzfall geltenden chemischen und/oder biologischen Anforderungen realisierbar ist.

Wegen seiner guten Verarbeitbarkeit einerseits und seinen guten chemischen und mechanischen Eigenschaften anderseits haben sich neben Hartgummi oder fluorhaltigen Kunststoffen, wie z.B. PTFE, PFA, in besonderem Maße auch Polyurethane als Material für Liner von In-Line-Meßgeräten, insb. solchen mit magnetisch-induktivem Meßaufnehmer, etabliert.

Bei den für die Herstellung von Linern der beschriebenen Art verwendeten Polyurethanen handelt es sich zumeist um elastomere Kunststoffe, die auf Basis eines unmittelbar vor der Verarbeitung aus reaktiven Ausgangskomponenten gebildeten, flüssigen Mehrkomponentensystems hergestellt sind, wobei letzteres jeweils nach dem Zusammenmischen auf die zuvor ggf. mit einem Haftvermittler - dem sogenannten Primer - behandelte Innenwand des Trägerrohrs appliziert und dort innerhalb einer vorgebbaren Reaktionszeit zum Liner aushärten gelassen wird. Als Primer kann dabei beispielsweise ein Anstrich- oder Beschichtungskunststoff, wie z.B. ein Kunstharzlack, ein Alkydharzlack, ein Acrylanstrich, ein Dispersionsanstrich, ein Silikatanstrich, ein Epoxydharz oder dergleichen dienen.

Polyurethane werden bekanntlich nach dem Polyadditionsverfahren aus Di- und Poly-Isocyanaten mit zwei- oder mehrwertigen Alkoholen hergestellt. Als Ausgangskomponenten können dabei beispielsweise Präpolymere, aufgebaut aus aliphatischen und/oder aromatischen Ether- und/oder Ester-Gruppen sowie Glycol- und Isocyanat-Gruppen dienen, die mit dem zugeführten zwei- oder mehrwertigen Alkohohl entsprechend reagieren können. Gegebenenfalls werden darüber hinaus pulvrige oder pastöse, ggf. auch farbgebende Füllstoffe, wie z.B. Carbonate, Silikate, Ruß, Pigmente oder reaktive Farbstoffe, hinzugemischt.

Zur Fertigung von aus Polyurethan bestehenden Linern wird oftmals ein sogenanntes Ribbon-Flow-Verfahren angewendet, bei dem das zuvor hergestellte flüssige Mehrkomponentensystem mittels eines entsprechenden Gieß- oder Sprühkopf auf der in geeigneter Weise bewegten, ggf. vorbehandelten Innenwand des Trägerrohrs gleichmäßig verteilt wird. Die danach für das Aushärten erforderliche Reaktionszeit des Mehrkomponentensystems kann neben der Dosierung der Ausgangskomponenten in erheblichem Maße auch durch eine geeignete Führung der Verarbeitungstemperatur eingestellt werden. Allerdings lassen sich kurze Reaktionszeiten von weniger als einer Minute, wie sie für eine kostengünstige Herstellung des Liners auf einer etwa bei Raumtemperatur liegenden Verarbeitungstemperatur erforderlich sind, üblicherweise lediglich durch Beigabe eines geeigneten zumeist schwermetall- und/oder aminhaltigen Katalysators zum Mehrkomponentensystem erzielen. Als Katalysatoren kommen dabei im besonderen tertiäre Amine und/oder Quecksilber zum Einsatz. In Anbetracht dessen, daß der Katalysator selbst im wesentlichen unverändert im fertigen Polyurethan verbleibt, weist letzteres dann insoweit zwangsläufig auch toxische, zumindest aber physiologisch nicht völlig unbedenkliche Verbindungen auf. Zahlreiche Untersuchungen haben zudem gezeigt, daß besonders der Katalysator zumindest bei Anwesenheit von Wasser in erheblichem Maße aus dem Liner herausgelöst werden kann. Gleiches ist im übrigen auch für allfällig im Liner verbliebenen, nicht ausreagierte Reste der der einen oder anderen Ausgangskomponente oder auch Reaktionszwischen- oder Reaktionsnebenprodukte davon in Betracht zu ziehen.

Insoweit sind die derzeit in In-Line-Meßgeräten verwendeten Polyurethane nur bedingt für Anwendungen mit hohen hygienischen Anforderungen, wie z.B. für Messungen im Trinkwasserbereich, geeignet, da die im Trinkwasserbereich für fluidberührende Bauteile gestellten hohen Anforderungen hinsichtlich der chemischen Beständigkeit sowie der physiologischen Verträglichkeit nicht mehr ohne weiteres erfüllt werden können. Vielmehr kommen daher besonders im Trinkwasserbereich derzeit vergleichsweise teure Liner aus PFA, PTFE oder Hartgummi zum Einsatz.

Besonderes Augenmerk wird im Trinkwasserbereich u.a. auf die Einhaltung der maximal tolerierbaren Migrationsrate (M_{max, TOC}) hinsichtlich eines gesamtorganischen Kohlenstoffgehaltes (TOC) und/oder der für toxikologisch kritische Substanzen definierten spezifischen Migrationsgrenzwerte (SML) gelegt. Gleichermaßen streng sind die Anforderungen hinsichtlich der Wirkung des Liners auf die äußere Beschaffenheit von Trinkwasser, insb. hinsichtlich der Geschmacks-, Färbungs-, Trübungs- und/oder Geruchsneutralität des Liners bei Anwesenheit von Wasser, sowie hinsichtlich der maximal tolerierbarer Chlorzehrungsraten (M_{max, Cl}).

In Anbetracht dessen, daß das Herausdiffundieren und/oder das durch allfällige Verletzungen des Liners begünstigte Herauslösen auch tiefer liegender Bestandteile des jeweils verwendeten Kunststoffs in das zu messende Fluid über die gesamte Betriebszeit des In-Line-Meßgeräts nicht ohne weiteres ausgeschlossen werden kann, müssen zumindest für Anwendungen im Trinkwasserbereich nicht nur der betriebsgemäß Fluid berührende Liner, sondern auch der gegebenenfalls verwendete zwischen Trägerrohr und Liner vermittelnde Primer dieselben strengen Anforderungen erfüllen.

Das technische Datenblatt zum IFS 4000 KC (Enviromag) von © KROHNE 05/2004, offenbart ein Baukastensystem für magnetisch induktive Durchflussmessgeräte für spezifische Anwendungen im Wasser- und Abwasserbereich. Das Baukastensystem stellt auch trinkwassertaugliche Geräte bereit. Als Liner werden im Baukastensystem Hartgummi oder Polyurethan angeboten.

Die amerikanische Patentanmeldung US 4,774,844 A1 lehrt das Brechen und Ablösen des Liners vom Trägerrohr auf Grund von unterschiedlicher Ausdehnungskoeffizienten. Um dies zu vermeiden wird vorgeschlagen vor dem Applizieren des Liners einen kommerziell erhältlichen Haftvermittler, wie THIXON, auf das Trägerrohr aufzutragen.

In der US 5,776,548 A1 wird ein Verfahren offenbart, mit dem die Haftung von Polyurethan auf Metalloxid-Beschichtungen verbessert wird. Als Haftvermittler wird ein vernetztes Copolymer aus Acrylsäure mit substituierten 2-Ethylhexylacrylat oder Cyanoethylacrylat nahegelegt.

Die JPH 5220451 A offenbart eine Methode zum Verbessern der Haftung des Polyurethan-Liners zum Trägerrohr. Dafür wird das Trägerrohr zuerst mit einem Polyvinylbutyral behandelt und dann mit einem Polyurethanbasierten Primer mit Isocyanatgruppen beschichtet.

Die WO 2006/067077 A2 und die WO 2007/033901 A1 offenbaren ein In-Line-Messgerät mit einem für Trinkwasser geeigneten Liner aus Polyurethan und ein Verfahren zur Herstellung dieses im Trinkwasserbereich anwendbaren Polyurethan-Liners.

Keine der genannten Dokumente offenbart jedoch ein In-Line-Messgerät mit einem für den Trinkwasserbereich zugelassenen Liner und Primer.

Eine Aufgabe der Erfindung besteht daher darin, ein In-Line-Meßgerät mit einem, insb. magnetisch-induktiven, Meßaufnehmer mit einem dessen Meßrohr innen auskleidenden Liner anzugeben, der gute physiologische, organo-leptische wie auch bakteriologische Eigenschaften aufweist. Zudem soll das In-Line-Meßgerät trotz Verwendung eines Materials für den Liner und auch den Primer, das den für Trinkwasseranwendungen gestellten hohen chemisch-biologischen und hygienischen Anforderungen genügen kann, möglichst kostengünstig herzustellen sein. Zudem soll das In-Line-Meßgerät einem möglichst umfänglich diversitären Anwendungsbereichen, insb. auch im Trinkwasserbereich, zugänglich sein.

Zur Lösung der Aufgabe besteht die Erfindung in einem

In-Line-Meßgerät, insb. Durchflußmeßgerät, zum Messen eines in einer Rohrleitung strömenden Trinkwassers, welches In-Line-Meßgerät einen, insb. magnetisch-induktiven oder akustischen, Meßaufnehmer mit einem in den Verlauf der Rohrleitung eingefügten, dem Führen des zu messenden Fluids dienenden Meßrohr (1) umfaßt, das mittels eines metallischen, Trägerrohrs (2) sowie mittels eines dieses innen auskleidenden Liners (3) gebildet ist,
- wobei der Liner (3) aus einem für Trinkwasser geeigneten Polyurethan besteht,
- wobei Trägerrohr (2) und Liner (3) unter Zwischenlage eines vermittelnden, ebenfalls für Trinkwasser geeigneten, Primers (4) aneinander haften,
- wobei der Primer aus einem Polyurethan besteht und
- wobei das Polyurethan für den Liner (3) als auch das Polyurethan für den Primer (4) jeweils für sich für die Verwendung im Trinkwasserbereich zugelassen ist,
- wobei sich die Trinkwassereignung durch die Erfüllung der Anforderungen des "NSF/ANSI Standard 61" an Trinkwassersystemkomponenten ergibt.

Ferner besteht die Erfindung in einem Verfahren zum Herstellen eines Meßrohrs eines In-Line-Meßgeräts nach einem der vorherigen Ansprüche, welches Verfahren folgende Schritte umfaßt:
- Bilden eines fließfähigen, insb. sprüh und/oder streichfähigen, ersten Mehrkomponentensystems, das Isocyanat, insb. Diisocyanat, sowie einen zwei- oder mehrwertigen Alkohol enthält,
- Applizieren des ersten Mehrkomponentensystems auf eine Innenwand eines als Bestandteil des Meßrohrs dienenden metallischen, Trägerrohrs,
- Aushärtenlassen zumindest von Teilen des ersten Mehrkomponentensystems auf der Innenwand des Trägerrohrs zum Bilden eines am Trägerohr haftenden Primers, wobei ein auf Basis des ersten Mehrkomponentensystem gebildetes Polyurethan für die Verwendung im Trinkwasserbereich zugelassen ist,
- wobei sich die Trinkwassereignung durch die Erfüllung der Anforderungen des "NSF/ANSI Standard 61" an Trinkwassersystemkomponenten ergibt,
- Bilden eines fließfähigen zweiten Mehrkomponentensystems, das Isocyanat, insb. Diisocyanat, einen zwei- oder mehrwertigen Alkohol sowie einen Katalysator enthält, wobei ein auf Basis des zweiten Mehrkomponentensystem gebildetes Polyurethan für die Verwendung im Trinkwasserbereich zugelassen ist,
- wobei sich die Trinkwassereignung durch die Erfüllung der Anforderungen des "NSF/ANSI Standard 61" an Trinkwassersystemkomponenten ergibt,
- Applizieren des zweiten Mehrkomponentensystems auf den auf der Innenwand des Trägerrohrs gebildeten Primer, und
- Aushärtenlassen des zweiten Mehrkomponentensystems im Trägerrohr zum Bilden des Liners.

Des weiteren ist vorgesehen, das vorgenannte, insb. gemäß dem Verfahren der Erfindung hergestellte, In-Line-Meßgerät zum Messen eines Durchflusses und/oder einer Strömungsgeschwindigkeit von in einer Rohrleitung strömendem Wasser, insb. Trinkwasser zu verwenden.

Gemäß einer ersten Ausgestaltung dieser Weiterbildung der Erfindung ist vorgesehen, daß das Polyurethan des Liners und das Polyurethan des Primers unterschiedlich sind.

Gemäß einer zweiten Ausgestaltung dieser Weiterbildung der Erfindung ist vorgesehen, daß Liner und Primer zumindest anteilig aus im wesentlichen gleichem Polyurethan bestehen.

Gemäß einer dritten Ausgestaltung des In-Line-Meßgeräts der Erfindung ist vorgesehen, daß das Polyurethan des Liners und/oder das Polyurethan des Primers aromatische und/oder aliphatische Verbindungen aufweist.

Gemäß einer vierten Ausgestaltung des In-Line-Meßgeräts der Erfindung ist vorgesehen, daß das Polyurethan des Liners und/oder das Polyurethan des Primers, insb. aliphatische, Ether-Gruppen aufweist.

Gemäß einer fünften Ausgestaltung des In-Line-Meßgeräts der Erfindung ist vorgesehen, daß das Polyurethan des Liners und/oder das Polyurethan des Primers, insb. aliphatische, Ester-Gruppen aufweist.

Gemäß einer sechsten Ausgestaltung des In-Line-Meßgeräts der Erfindung ist vorgesehen, daß zumindest das Polyurethan des Liners unter Verwendung eines metall-organische Verbindungen aufweisenden Katalysators hergestellt ist.

Gemäß einer siebenten Ausgestaltung des In-Line-Meßgeräts der Erfindung ist vorgesehen, solch einen Katalysator für die Herstellung des Liners zu verwenden, daß mit diesem Katalysator in den Liner allfällig eingebrachte und dort verbliebene Metalle chemisch, insb. atomisch, und/oder physikalisch an im Liner gebildete Kohlenstoffketten gebunden sind.

Gemäß einer achten Ausgestaltung des In-Line-Meßgeräts der Erfindung ist vorgesehen, daß der zumindest für die Herstellung des Polyurethans des Liners verwendete Katalysator Zinn enthält und wobei der Liner organisch, insbesondere aliphatisch, gebundenes Zinn aufweist.

Gemäß einer neunten Ausgestaltung des In-Line-Meßgeräts der Erfindung ist vorgesehen, daß der zumindest für die Herstellung des Polyurethans des Liners verwendete Katalysator im wesentlichen frei von Schwermetallen ist.

Gemäß einer zehnten Ausgestaltung des In-Line-Meßgeräts der Erfindung ist vorgesehen, daß der zumindest für die Herstellung des Polyurethans des Liners verwendete Katalysator im wesentlichen frei von Aminen ist.

Gemäß einer elften Ausgestaltung des In-Line-Meßgeräts der Erfindung ist vorgesehen, daß auch das Polyurethan des Primers unter Verwendung eines metall-organische Verbindungen aufweisenden Katalysators hergestellt ist.

Gemäß einer zwölften Ausgestaltung des In-Line-Meßgeräts der Erfindung ist vorgesehen, daß das Polyurethan des Liners und das Polyurethan des Primers unter Verwendung des gleichen Katalysators hergestellt sind.

Gemäß einer dreizehnten Ausgestaltung des In-Line-Meßgeräts der Erfindung ist vorgesehen, daß das Polyurethan des Liners und/oder das Polyurethan des Primers mittels wenigstens eines Mehrkomponentensystems hergestellt ist, das auf Basis von, insb. aromatischen und/oder aliphatischen, Isocynaten, insb. auf Basis von Diisocynaten, sowie zwei- oder mehrwertigem Alkohol, beispielsweise einem Butandiol, gebildet ist. Gemäß einer Weiterbildung dieser Ausgestaltung des In-Line-Meßgeräts der Erfindung ist vorgesehen, daß das wenigstens eine Mehrkomponentensystem auf Basis monomerer und/oder präpolymerer und/oder polymerer Isocynate gebildet ist. Gemäß einer anderen Weiterbildung dieser Ausgestaltung der Erfindung ist ferner vorgesehen, daß das wenigstens eine Mehrkomponentensystem unter Verwendung von Diisocynaten, insb. von Diphenylmethandiisocyanat (MDI), Hexandiisocyanat (HDI), Toluylendiisocyants (TDI) und/oder Isophorondiisoyanat (IPDI), hergestellt ist.

Gemäß einer vierzehnten Ausgestaltung des In-Line-Meßgeräts der Erfindung ist vorgesehen, daß das Polyurethan des Liners und/oder das Polyurethan des Primers mittels wenigstens eines Mehrkomponentensystems hergestellt ist, das auf Basis von, insb. aromatischen und/oder aliphatischen, Isocynaten, insb. auf Basis von Diisocynaten, sowie zwei- oder mehrwertigem Alkohol gebildet ist, der als ein Präpolymer ausgebildet ist. Gemäß einer Weiterbildung dieser Ausgestaltung des In-Line-Meßgeräts der Erfindung ist vorgesehen, daß es sich bei dem Alkohol um ein Präpolymer auf Basis von Rizinusöl handelt.

Gemäß einer fünfzehnten Ausgestaltung des In-Line-Meßgeräts der Erfindung ist vorgesehen, daß sowohl der Liner als auch der Primer im wesentlichen frei von Schwermetallen ist.

Gemäß einer sechzehnten Ausgestaltung des In-Line-Meßgeräts der Erfindung ist vorgesehen, daß sowohl Liner als auch der Primer im wesentlichen frei von Aminen ist.

Gemäß einer siebzehnten Ausgestaltung des In-Line-Meßgeräts der Erfindung ist vorgesehen, daß der Liner eine Dicke von weniger als 8 mm, insb. weniger als 4 mm aufweist.

Gemäß einer achtzehnten Ausgestaltung des In-Line-Meßgeräts der Erfindung ist vorgesehen, daß der Primer eine Dicke von weniger als 500 µm, insb. weniger als 300 µm aufweist.

Gemäß einer neunzehnten Ausgestaltung des In-Line-Meßgeräts der Erfindung ist vorgesehen, daß das Meßrohr eine Nennweite aufweist, die kleiner oder gleich 2000 mm ist.

Gemäß einer zwanzigsten Ausgestaltung des In-Line-Meßgeräts der Erfindung ist vorgesehen, daß das Meßrohr eine Nennweite aufweist, die größer oder gleich 25 mm ist.

Nach einer Weiterbildung des In-Line-Meßgeräts der Erfindung umfaßt der Meßaufnehmer eine am Meßrohr angeordnete Magnetkreisanordnung zum Erzeugen und Führen eines magnetischen Feldes, das im strömenden Fluid ein elektrisches Feld induziert, und Meßelektroden zum Abgreifen von im strömenden Fluid induzierten elektrischen Spannungen.

Nach einer ersten Ausgestaltung des Verfahrens der Erfindung ist vorgesehen, daß der Katalysator des zweiten Mehrkomponentensystems, insb. von einem physiologisch unbedenklichen Metall gebildete, metall-organische Verbindungen, wie z.B. zinn-organo Verbindungen oder dergleichen, aufweist. Gemäß einer Weiterbildung dieser Ausgestaltung des Verfahrens der Erfindung ist vorgesehen, daß der Katalysator des zweiten Mehrkomponentensystems zinn-organo Verbindungen, insb. Di-n-octylzinn-Verbindungen, aufweist. Gemäß einer anderen Weiterbildung dieser Ausgestaltung des Verfahrens der Erfindung ist vorgesehen, daß es sich bei dem Katalysator um ein Di-n-octylzinndilaurat und/oder ein Di-n-octylzinndimalinat handelt.

Nach einer zweiten Ausgestaltung des Verfahrens der Erfindung ist vorgesehen, daß das Präpolymer des ersten und/oder des zweiten Mehrkomponentensystems mindestens zwei reaktive NCO-Gruppen aufweist.

Nach einer dritten Ausgestaltung des Verfahrens der Erfindung ist vorgesehen, daß das Präpolymer des ersten und/oder des zweiten Mehrkomponentensystems aromatische und/oder aliphatische Isocyanat-Gruppen aufweist.

Nach einer vierten Ausgestaltung des Verfahrens der Erfindung ist vorgesehen, daß das erste und/oder das zweite Mehrkomponentensystem monomeres und/oder präpolymeres und/oder polymeres Isocynat enthält.

Nach einer fünften Ausgestaltung des Verfahrens der Erfindung ist vorgesehen, daß das erste und/oder das zweite Mehrkomponentensystems unter Verwendung eines Präpolymer auf Basis von Diisocynat gebildet ist. Gemäß einer Weiterbildung dieser Ausgestaltung des Verfahrens der Erfindung ist vorgesehen, daß das Präpolymer des ersten und/oder des zweiten Mehrkomponentensystems auf der Basis von Diphenylmethandiisocyanat (MDI), Hexandiisocyanat (HDI), Toluylendiisocyants (TDI) und/oder Isophorondiisoyanat (IPDI) gebildet ist.

Nach einer sechsten Ausgestaltung des Verfahrens der Erfindung ist vorgesehen, daß das erste und/oder das zweite Mehrkomponentensystem, insb. aliphatische und/oder aromatische, Ether-Gruppen und/oder, insb. aliphatische und/oder aromatische, Ester-Gruppen aufweist.

Nach einer siebenten Ausgestaltung des Verfahrens der Erfindung ist vorgesehen, daß es sich bei dem Alkohol des ersten und/oder des zweiten Mehrkomponentensystems um ein Diol, insb. ein Butandiol handelt.

Nach einer achten Ausgestaltung des Verfahrens der Erfindung ist vorgesehen, daß es sich bei dem Alkohol des ersten und/oder des zweiten Mehrkomponentensystems um ein auf Basis von Rizinusöl gebildetes Präpolymer handelt.

Nach einer neunten Ausgestaltung des Verfahrens der Erfindung ist vorgesehen, daß auch das erste Mehrkomponentensystem einen Katalysator enthält. Gemäß einer Weiterbildung dieser Ausgestaltung des Verfahrens der Erfindung ist vorgesehen, daß der Katalysator des ersten Mehrkomponentensystems, insb. von einem physiologisch unbedenklichen Metall gebildete, metall-organische Verbindungen, wie z.B. zinn-organo Verbindungen oder dergleichen, aufweist. Gemäß einer anderen Weiterbildung dieser Ausgestaltung des Verfahrens der Erfindung ist vorgesehen, daß der Katalysator des ersten Mehrkomponentensystems zinn-organo Verbindungen, insb. Di-n-octylzinn-Verbindungen, aufweist.

Nach einer zehnten Ausgestaltung des Verfahrens der Erfindung wird dieses bei einer Verarbeitungstemperatur von weniger als 100°C, insb. bei etwa 25°C, durchgeführt.

Die Erfindung beruht u.a. auf der überraschenden Erkenntnis, daß Liner aus Polyurethan, insb. auch in bakteriologischer Hinsicht, durchaus auch gute biologische Eigenschaften aufweisen und insoweit durchaus auch für die Anwendung in In-Line-Meßgeräten der beschriebenen Art gut geeignet sein können, die für das Messen wäßriger Fluide, insb. auch Trinkwasser, vorgesehen sind.

Ein Grundgedanke der Erfindung besteht darin, zur Fertigung des, ggf. auch mehrschichtig aufgebauten, Liners für Trinkwasser taugliches Polyurethan zu verwenden, auch für den darunterliegenden Primer. Dies wird im besonderen dadurch erreicht, daß solches Polyurethan verwendet wird, bei dem allfällig von der Herstellung verbliebene monomere und/oder metallische Rückstände ebenfalls keine für Trinkwasseranwendungen unzulässig hohen schädlichen Wirkungen und/oder Diffusionsraten aufweist.

Ferner geht es bei der Erfindung auch darum, zumindest für den Liner solch ein Polyurethan zu verwenden, das unter Zugabe eines metall-organischen, gleichwohl aminfreien und/oder schwermetallfreien Katalysators hergestellt ist. Durch die Verwendung eines Katalysators auf Basis von metall-organischen Verbindungen kann erreicht werden, daß seitens des eingesetzten Katalysators in den Liner eingebrachte Metalle physikalisch und/oder chemisch, insb. atomisch und/oder durch Cross-Linking, an Kohlenstoffketten gebunden und insoweit eher beständig und dauerhaft im Polyurethan eingebettet sind. Infolgedessen wird so sichergestellt, daß im Betrieb des In-Line-Meßgeräts vom Liner - wenn überhaupt - nur sehr geringe Mengen an Metallen oder Metallverbindungen in physiologisch unbedenklichen Raten in das zu messende Fluid abgegeben werden. Zudem kann bei Verwendung von physiologisch eher unbedenklichen Nicht-Schwermetallen für den Katalysator, wie z.B. Zinn, ein praktisch auch im Hinblick auf den verwendeten Katalysator "eigensicheres" Polyurethan gebildet werden, durch das also selbst bei einem allfälligen Herauslösen von mit dem Katalysator eingebrachten Metallen bzw. Metallverbindungen sichergestellt werden kann, daß dadurch zumindest keine hygienisch inakzeptable Verunreinigung des betroffenen Fluids verursacht wird.

Ein weiterer Vorteil der Erfindung besteht u.a. darin, daß der Liner und der ggf. verwendete Primer zumindest anteilig mit gleichen Ausgangskomponenten hergestellt werden können, wodurch die Herstellkosten des Meßrohrs, insb. die Einkaufs-, Lager- und Logistikkosten für die Ausgangskomponenten von Liner und Primer, und insoweit auch die Herstellkosten des In-Line-Meßgeräts insgesamt reduziert werden können.

Die Erfindung und vorteilhafte Ausgestaltungen werden nachfolgend anhand der Figuren der Zeichnung näher erläutert. Gleiche Teile sind mit gleichen Bezugszeichen versehen. Falls es die Übersichtlichkeit jedoch erfordert, sind Bezugszeichen in nachfolgenden Figuren weggelassen.
- Fig. 1: zeigt perspektivisch in einer Seitenansicht ein Meßrohr für ein, insb. magnetisch-induktives, In-Line-Meßgerät, und
- Fig. 2: zeigt in einem Längsschnitt das Meßrohr von Fig. 1.

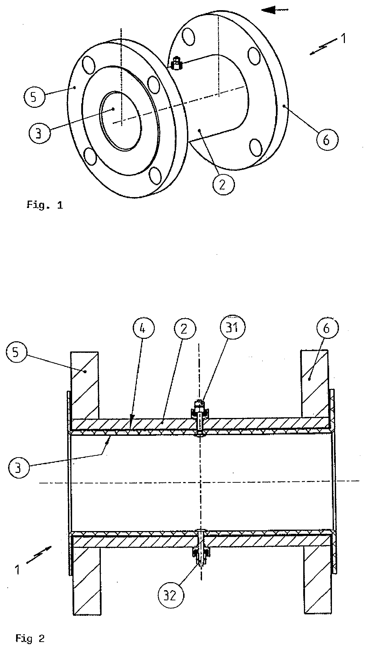

In den Fig. 1 und 2 ist in verschiedenen Ansichten ein Meßrohr 1 für einen Meßaufnehmer eines In-Line-Meßgeräts dargestellt, das dazu dient, ein in einer - hier nicht dargestellten - Rohrleitung strömendes Fluid zu messen, beispielsweise dessen Strömungsgeschwindigkeit und/oder dessen Volumendurchflußrate. Bei dem In-Line-Meßgerät kann es sich beispielsweise um ein magnetisch-induktiv messendes oder auf Basis von Ultraschall akustisch messendes Durchflußmeßgerät handeln. Im besonderen ist das In-Line-Meßgerät dafür vorgesehen, in Trinkwasser-Verteilnetzen eingesetzt zu werden.

Das Meßrohr 1 weist ein metallisches Trägerrohr 2 von vorgebbarem Lumen und einen rohrförmigen, aus einem Isoliermaterial bestehenden Liner 3 von vorgebbarer Weite auf. Das Trägerrohr 2 besteht aus einem nicht-ferromagnetischen Material, wie z.B. Edelstahl oder einem anderen rostfreien Metall, und umschließt den Liner 3 koaxial, so daß dieser das Trägerrohr 2 innen vollständig auskleidet und insoweit vom im Betrieb hindurchströmenden Fluid praktisch völlig isoliert. Der Liner 3 des erfindungsgemäßen In-Line-Meßgeräts besteht aus einem Polyurethan (PUR₃). Zum Verbinden von Liner 3 und Trägerrohr 2 ist des weiteren eine dazwischen liegender, ebenfalls aus einem Polyurethan (PUR₄) bestehender Primer 4 vorgesehen. Der Primer 4 kann beispielsweise bei der Fertigung des Meßrohrs in flüssigem Zustand dünnlagig auf die Innenwand des Trägerohrs 2 appliziert, beispielsweise aufgespritzt oder aufgestrichen, werden. Nachdem das den Primer 4 bildende Polyurethan (PUR₄) zumindest teilweise, jedenfalls in für die weitere Verarbeitung ausreichendem Maße auf der Innenwand des Trägerrohrs 2 aushärten gelassen worden ist, kann dann der eigentliche Liner 3 beispielsweise dadurch hergestellt werden, daß dafür vorgesehenes fließfähiges Polyurethan (PUR₃) in einem Schleuder-Verfahren oder in einem sogenannten Ribbon-Flow-Verfahren auf die Innenwand des Trägerrohrs 2 appliziert und dort flächendeckend und möglichst gleichmäßig verteilt wird.

Nach einer Ausgestaltung der Erfindung ist vorgesehen, daß das für die Herstellung des Liners 3 ein Polyurethan verwendet wird, das von einem Polyurethan für den Primer 4 verschieden ist. Alternativ dazu können, insb. für den Fall, daß Liner 3 und Primer 4 im wesentlichen dieselben chemischen Eigenschaften aufweisen sollen, zur Herstellung von Liner und Primer aber auch im wesentlichen gleiche Polyurethane verwendet werden.

Nach einer weiteren Ausgestaltung der Erfindung ist das Meßrohr für die Verwendung in einem In-Line-Meßgerät mit einem magnetisch-induktiven Meßaufnehmer vorgesehen. Dementsprechend umfaßt der Meßaufnehmer ferner eine am Meßrohr angeordnete Magnetkreisanordnung zum Erzeugen und Führen eines magnetischen Feldes, das im strömenden - hier elektrisch leitfähigen - Fluid eine elektrische Spannung induziert, sowie Meßelektroden zum Abgreifen von im strömenden Fluid induzierten Spannungen. Die Magnetkreisanordnung weist üblicherweise zwei Feldspulen auf, die im Meßbetrieb mit einer - hier nicht dargestellten - dem Erzeugen veränderlicher elektrischer Ströme von vorgebbarer Stromstärke dienenden Erreger-Elektronik des In-Line-Meßgeräts verbunden und zumindest zeitweise von einem entsprechenden Erregerstrom durchflossen sind. Das dadurch erzeugte Magnetfeld durchsetzt das innerhalb des Meßrohrs 1 strömende Fluid zumindest abschnittsweise senkrecht zu dessen Strömungsrichtung. Zum Abgreifen der im strömenden Fluid entsprechend induzierten elektrischen Spannung weist der Meßaufnehmer eine am Meßrohr 1 angebrachte Sensoranordnung auf, die eine erste und eine zweite Meßelektrode 31, 32 umfaßt. Diese liegen einander diametral gegenüber, wobei ein die Meßelektroden imaginär verbindender Durchmesser des Meßrohrs 1 zu einem die Feldspulen imaginär verbindenden Durchmesser des Meßrohrs 1 senkrecht verläuft. Selbstverständlich können die Meßelektroden 31, 32, falls erforderlich, insb. bei mehr als zwei Meßelektroden, am Meßrohr 1 so voneinander beabstandet angeordnet werden, daß sie sich nicht diametral gegenüberliegen. Dies kann z.B. dann der Fall sein, wenn zusätzliche Meßelektroden für Referenzpotentiale oder bei waagerechter Einbaulage des Meßrohrs 1 Meßelektroden zur Überwachung eines Mindestfüllstandes des Fluids im Meßrohr 1 vorgesehen sind. Zum fluiddichten Einfügen in die Rohrleitung weist das Meßrohr 1 ferner an einem ersten Meßrohrende einen ersten Flansch 5 und an einem zweiten Meßrohrende einen zweiten Flansch 6 auf. Trägerohr 2 und Flansche 5, 6 sind im hier gezeigten Ausführungsbeispiel jeweils von kreisförmigem Querschnitt.

Bei der Herstellung des Meßrohrs 1 selbst wird zunächst das Trägerrohr 2 mit der gewünschten Länge und ggf. mit für das Einsetzen von Elektroden bzw. Feldspulen allfällig erforderlichen seitlichen Mantel-Öffnungen bereitgestellt. Gleichermaßen werden die Metallflansche 5, 6 entsprechend vorbereitet. Dann wird an jedem Ende des Trägerrohrs 2 jeweils einer der Flansche 5, 6 so über dessen Außenseite geschoben. Daraufhin wird eine jeweilige Rückseite des jeweiligen Metallflansches 5, 6 mit der Außenseite des Trägerrohrs 2 mechanisch fest und dicht verbunden. Dies kann bei Verwendung eines metallischen Trägerrohrs und metallischer Flansche beispielsweise durch Löten, Hartlöten oder Schweißen geschehen, was zu einer entsprechenden Löt-, Hartlöt- oder Schweißnaht 7 führt. Der von den Flanschen 5, 6 und dem Trägerrohr 2 gebildete Zwischenraum - kann wie im besonderen bei magnetisch-induktiven Meßaufnehmern üblich - mittels eines umlaufenden Bleches verschlossen werden. Der Zwischenraum kann für den Fall, daß das Meßrohr für einen magnetisch-induktiven Meßaufnehmer verwendet werden soll, beispielsweise zur Aufnahme der das erwähnte Magnetfeld erzeugenden Feldspulen und weiterer Komponenten der erwähnten Magnetkreisanordnung dienen. Wenn das Blech dabei als Bestandteil des Magnetkreises dienen soll, ist es vorzugsweise ferromagnetisch auszubilden.

Wie bereits angedeutet, dient das In-Line-Meßgerät im besonderen auch dazu, solche Fluide zu messen, die erhöhten Anforderungen hinsichtlich chemisch-biologischer wie auch bakteriologischer Reinheit unterworfen sind, wie z.B. Trinkwasser. Daher ist beim erfindungsgemäßen Meßrohr 1 ferner vorgesehen, daß sowohl das Polyurethan (PUR₃) für den Liner 3 als auch Polyurethan (PUR₄) für den Primer 4 jeweils für sich für die Verwendung im Trinkwasserbereich geeignet und zugelassen ist. Anders gesagt, sind das Polyurethan (PUR₃) für den Liner 3 und das Polyurethan (PUR₄) für den Primer 4 jeweils so ausgebildet, daß trotz anhaltendem Kontakt mit dem zu messenden Fluid, insb. Trinkwasser, zumindest keine unzulässig hohen, möglichst aber gar keine Verunreinigungen des Fluids durch im Liner und/oder im Primer enthaltene Inhaltsstoffe verursachen würde - seien es nun die ausreagierten Polyurethane selbst oder allfällig darin eingeschlossene nichtausreagierte Reste von einzelnen Ausgangskomponenten, Reaktionszwischen- und/oder Reaktionsnebenprodukte davon oder etwa eingebrachte Metalle oder Metallverbindungen. Als Material für den Liner 3 wie auch für den Primer 4 kann dabei beispielsweise jeweils ein solches Polyurethan verwendet werden, das aliphatische und/oder aromatische Ether-Gruppen und/oder das aliphatische und/oder aromatische Ester-Gruppen aufweist. Des weiteren kann sowohl das Polyurethan (PUR₃) für den Liner 3 als auch das Polyurethan (PUR₄) für den Primer 4 auf Basis von monomeren und/oder präpolymeren und/oder polymeren Isocynaten, ggf. auch mittels davon abgeleiteter Trimerisaten gebildet sein.

Gemäß einer weiteren Ausgestaltung der Erfindung ist dabei vorgesehen, das Polyurethan (PUR₃) des Liners 3 auf Basis eines mittels einer Isocynat, insb. Diisocynat, enthaltenen ersten Liner-Ausgangskomponenten (A₃) sowie einer zwei- oder mehrwertigen Alkohol enthaltenden zweiten Liner-Ausgangskomponenten (B₃) gebildeten Mehrkomponentensystems hergestellt ist. Alternativ oder in Ergänzung dazu ist ferner vorgesehen, das Polyurethan (PUR₄) des Primers 4 auf Basis eines mittels einer Isocynat, insb. Diisocynat und/oder höherwertiges Isocyanat, enthaltenen ersten Primer-Ausgangskomponenten (A₃) sowie einer zwei- oder mehrwertigen Alkohol enthaltenden zweiten Primer-Ausgangskomponenten (B₃) gebildeten Mehrkomponentensystems herzustellen.

Um den Liner 3 wie auch den Primer 4 jeweils in obigem Sinne trinkwassertauglich zu gestalten, wird gemäß einer weiteren Ausgestaltung der Erfindung zur Herstellung des für den Liner 3 verwendeten Polyurethans (PUR₃) wie auch zur Herstellung des für den Primer 4 verwendeten Polyurethans (PUR₄) u.a. jeweils auf die Verwendung eines schwermetallhaltigen und/oder eines aminhaltigen Katalysators verzichtet, obgleich diese Arten von Katalysatoren wegen ihrer guten Reaktivität für die maßhaltige Herstellung des Liners 3 wie auch für die Herstellung des Primer 4 eigentlich sehr vorteilhaft wären. Vielmehr wird beim erfindungsgemäßen In-Line-Meßgerät für die Herstellung zumindest von dessen Liner 3 ein Polyurethan (PUR₃) verwendet, das unter Beigabe eines metall-organische Verbindungen aufweisenden, insoweit als eine dritte Liner-Ausgangskomponente dienenden Katalysators (C₃) gebildet ist. Darüber hinaus ist das Polyurethan (PUR₃) für den Liner 3 so gewählt, daß die mit dem Katalysator (C₃) in den Liner eingebrachten und dort verbliebenen Metalle (Me) chemisch, insb. atomisch, und/oder physikalisch, insb. durch Cross-Linking, an im Liner gebildete Kohlenstoffketten gebunden sind. Ein Vorteil dieses Katalysators (C₃) besteht darin, daß dessen Organo-MetallVerbindungen derart in das Material des Liners eingebaut werden, daß auch unter Einwirkung von Wasser im Betrieb des In-Line-Meßgeräts - wenn überhaupt - allenfalls in physiologisch unbedenklichen Mengen und Raten des Katalysators aus dem Liner ausgelöst werden. In Ergänzung dazu ist gemäß einer Weiterbildung der Erfindung vorgesehen, auch für den Primer 4 ein solches Polyurethan (PUR₄) zu verwenden, das allenfalls mit Hilfe eines ebenfalls metall-organische Verbindungen aufweisenden Katalysators (C₄) gebildet ist. In Anbetracht allerdings dessen, daß bei der Fertigung des Primers 4 nicht notwendigerweise die gleichen Anforderungen hinsichtlich Fertigungsgeschwindigkeit und/oder Maßhaltigkeit gestellt werden müssen, wie beim Liner 3, kann bei der Herstellung des Primers 4 gegebenenfalls durchaus auch ganz auf die Verwendung eines Katalysators (C₄) verzichtet werden. Allerdings kann, falls erforderlich, auch dem für das Polyurthan (PUR₄) des Primers 4 ohne weiteres ein insoweit als eine dritte Primer - Ausgangskomponente dienender, gleichermaßen trinkwassertauglicher Katalysator (C₄) beigemischt werden. Dieser kann beispielsweise dem Katalysator (C₃) für das Polyurethan (PUR₃) des Liners 3 im wesentlichen entsprechen.

Nach einer Ausgestaltung der Erfindung enthält der zumindest für die Herstellung des Polyurethans (PUR₃) des Liners 3 verwendete Katalysator (C₃) Zinn-organo-Verbindungen, insb. Di-n-octylzinn-Verbindungen, wodurch sichergestellt werden kann, daß das über den Katalysator in den fertigen Liner 3 eingebrachte und letztlich dort verbliebene Zinn (Sn) chemisch und/oder physikalisch im Liner 3 selbst gebunden und insoweit dauerhaft darin eingebettet ist. Nach einer Ausgestaltung der Erfindung wird folgende Zinn-organo-Verbindung als Katalysator (C₃) zur Herstellung des Polyurethans (PUR₃) für den Liner 3 verwendet:

C₄₀H₈₀O₄Sn (1)

Als besonders vorteilhafter Katalysator (C₃) hat sich für die Herstellung des Liners 3 beispielsweise Di-n-octylzinndilaurat (DOTL), insb. jenes mit der CAS-Nr. 3648-18-8, erwiesen, dessen Struktur sich schematisch wie folgt darstellen läßt:

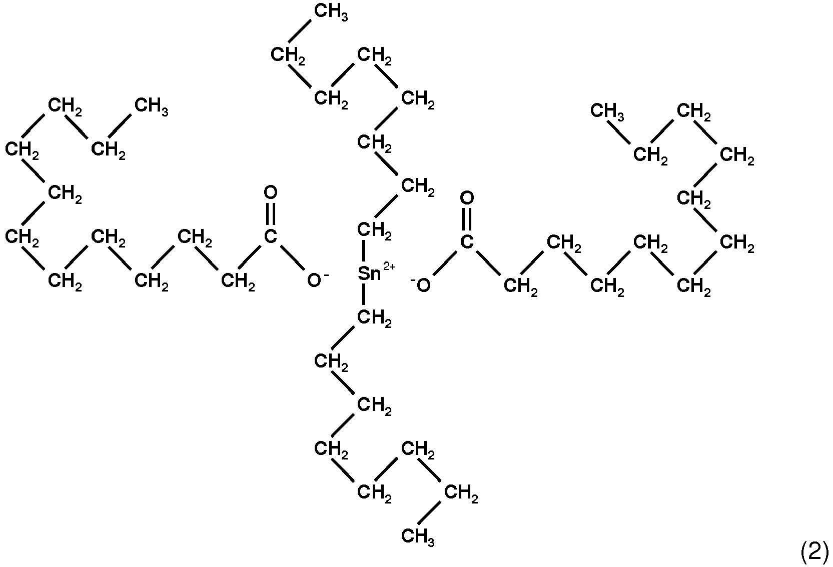

Darüber hinaus können beispielsweise auch Dioctylzinndimalinate oder ähnlich metall-organische Verbindungen als Katalysatoren (C₃) für die Herstellung des Liners 3 verwendet werden.

Nach einer Ausgestaltung der Erfindung handelt es sich zumindest bei dem Polyurethan (PUR₃) des Liners um ein Elastomere, das auf Basis eines Mehrkomponentensystems (A₃+B₃+C₃) hergestellt ist, welches mittels eines Präpolymers als erste Liner-Ausgangskomponente (A₃) und eines, insb. zwei- oder mehrwertigen, Alkohols als zweite Liner-Ausgangskomponente (B₃) sowie unter Verwendung eines als als dritte Liner-Ausgangskomponente dienenden Katalysators (C₃) der vorgenannten Art gebildet worden ist.

Beispielsweise kann es sich bei dem Polyurethan (PUR₃) für den Liner 3 um ein Elastomere handeln, das zumindest anteilig im wesentlichen folgende Struktur aufweist:

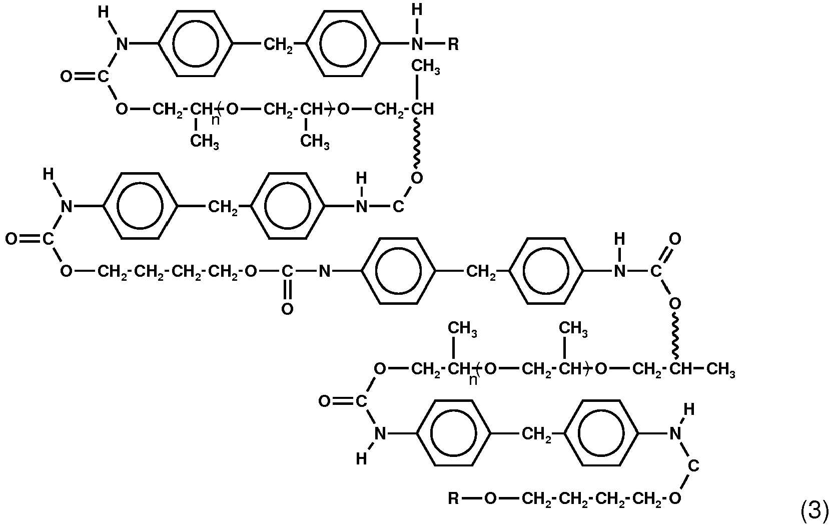

Nach einer weiteren Ausgestaltung der Erfindung handelt es sich zumindest bei dem für die Herstellung des Liners 3 verwendeten Alkohol (B₃) um einen solchen mit mindestens zwei funktionellen OH-Gruppen, beispielsweise ein Diol. Besonders gute Ergebnisse lassen sich hierbei beispielsweise durch Verwendung von Butandiol, insb. ein solches mit der CAS-Nr. 110-63-4, erzielen.

Gemäß einer anderen Ausgestaltung ist ferner vorgesehen, auch den Alkohol für das Polyurethan (PUR₃) des Liners 3 und/oder das Polyurethan (PUR₄) des Primes 4 als ein Präpolymer auszubilden. Als vorteilhaft hat sich in diesem Falle beispielsweise die Verwendung von präpolymerem Alkohol auf der Basis von Rizinusöl gezeigt. Gemäß einer weiteren Ausgestaltung der Erfindung handelt es sich zumindest bei dem für die Herstellung des Primers 4 verwendeten Alkohol (B₄) um ein Polyesterpolyol, wie z.B. Baycoll® AD 1122 oder Baycoll® CD 2084 von Bayer MaterialScience AG, Leverkusen, DE, und/oder ein Polyetherpolyol, wie z.B. Desmophen® 1380 BT von Bayer MaterialScience AG, Leverkusen, DE, und/oder ein, insb. verzweigter, entsprechend hydroxylgruppenhaltiger Polyester, wie z.B. Desmophen® 650 MPA von Bayer MaterialScience AG, Leverkusen, DE.

Für die Herstellung des Liners 3 wie auch des Primers 4 haben sich des weiteren Präpolymere oder Polymere mit zwei oder mehr reaktiven NCO-Gruppen, insb. mit aromatischen Isocyanaten, als besonders vorteilhaft erwiesen. Alternativ oder in Ergänzung dazu können aber auch entsprechende Isocyanat-Monomere oder auch Präpolymere oder Polymere auf der Basis von aliphatischen, ggf. auch cycloaliphatischen Isocyanat-Gruppen zur Herstellung des Polyurethans (PUR₃) des Liners 3 und/oder des Polyurethans (PUR₄) des Primers 4 verwendet werden.

Nach einer anderen Ausgestaltung der Erfindung ist zumindest die für die Herstellung des Liners 3 verwendete erste Liner-Ausgangskomponente (A₃) mittels eines Präpolymers gebildet, das zumindest anteilig gemäß folgender Strukturformel aufgebaut:

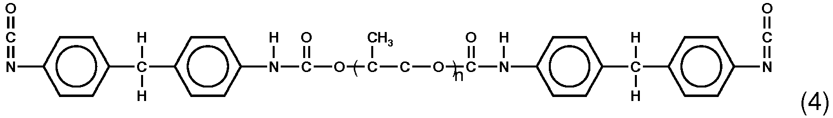

Zur Herstellung eines solchen Präpolymers wird gemäß einer Weiterbildung der Erfindung ein Polypropylenoxid verwendet, das mit einem, insb. überschüssig zugegebenen, aromatischen und/oder aliphatischem Diisocyanat reagieren gelassen wird. Gemäß einer weiteren Ausgestaltung der Erfindung wird als Polypropylenoxid zumindest für den Liner 3 ein Polypropylenglykol (PPG) verwendet, dessen Struktur vereinfacht etwa wie folgt beschrieben werden kann:

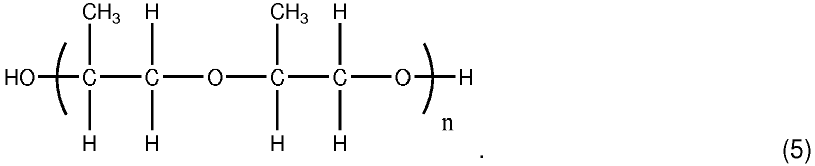

Alternativ oder in Ergänzung zum Polypropylenoxid kann beispielsweise auch ein Polytetramethylenetherglykol (PTMEG) mit folgendem strukturellen Aufbau zur Herstellung zumindest des Präpolymers (A₃) für den Liner 3 dienen:

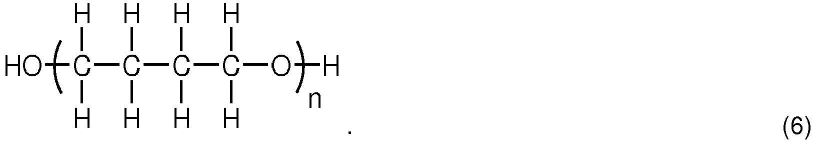

Darüber hinaus - alternativ oder in Ergänzung - können aber auch andere aliphatisch aufgebaute Glykol-Verbindungen mit polymeren Ether-Gruppe und endständigen OH-Gruppen zur Herstellung des als Liner-Ausgangskomponente (A₃) dienenden Präpolymers oder aber auch zur Herstellung des als Primer-Ausgangskomponente (A₄) dienenden Präpolymers verwendete werden.

Nach einer anderen Ausgestaltung der Erfindung handelt es sich bei dem für die Herstellung des Polyurethans (PUR₃) für den Liner 3 und/oder zur Herstellung des Polyurethans (PUR₄) für den Primer 4 verwendeten Diisocyanat um ein solches auf Basis eines aromatischen Diphenylmethandiisocyanat (MDI), insb. gemäß der CAS-Nr. 101-68-8 und mit wenigstens einer der folgenden isomeren Strukturen:

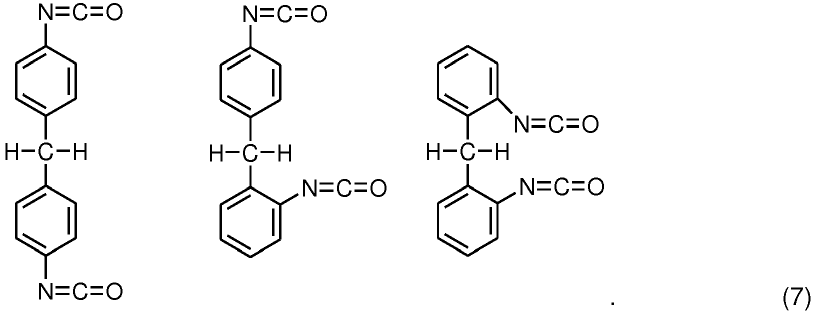

Monomere Isocyanate, insb. auf Basis von Diphenylmethandiisocyanat, werden beispielsweise als Desmodur® 44 M oder Desmodur® 2460 M von Bayer MaterialScience AG, Leverkusen, DE angeboten. Alternativ oder in Ergänzung zu den monomeren Diisocyanate können aber auch deren Homologen und/oder auch entsprechende Präpolymere, ggf. auch Polymere auf Basis derartiger Diisocynate für die Herstellung des Polyurethans (PUR₃) für den Liner 3 und/oder zur Herstellung des Polyurethans (PUR₄) für den Primer 4 verwendet werden, insb. mit der folgenden Struktur:

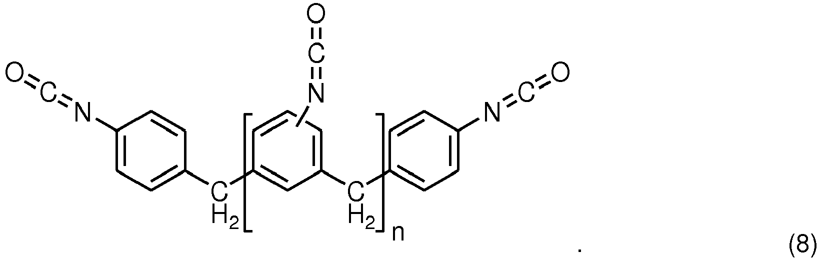

Präpolymere der vorgenannten Art auf der Basis von Diphenylmethandiisocyanat (MDI) werden beispielsweise als Desmodur® E 23 von Bayer MaterialScience AG, Leverkusen, DE angeboten.

Alternativ oder in Ergänzung dazu kann beispielsweise aber auch ein Präpolymer und/oder ein Polymer auf Basis aromatischen Toluylendiisocyants (TDI, CAS-Nr. 584-84-9), 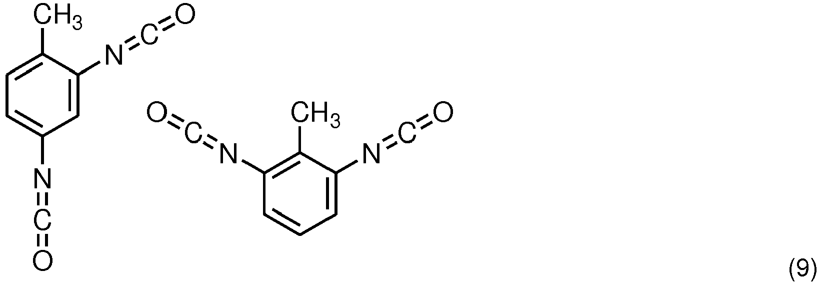 wie z.B. Desmodur® L 67 MPA/X oder Desmodur® L 75 von Bayer MaterialScience AG, Leverkusen, DE bei der Herstellung des Meßrohrs für wenigstens eines der Polyurethane (PUR₃), (PUR₄) verwendet werden, zumindest insoweit, als daß das Toluylendiisocyant für Anwendungen im Trinkwasserbereich zulässig ist.

Ferner ist aber auch möglich, für die Herstellung des Liners 3 und/oder des Primers 4 ein Präpolymer und/oder eine Polymer einzusetzen, das auf einem auch für Anwendungen im Trinkwasserbereich zulässigem, aliphatischem Hexandiisocyanat (HDI, CAS-Nr. 822-06-0) mit folgender Struktur: 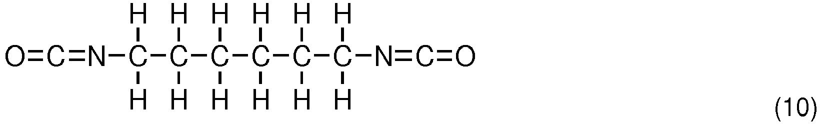 und/oder das auf einem auch für Anwendungen im Trinkwasserbereich zulässigem, aliphatischem Isophorondiisocyanat (IPDI, CAS-Nr. 4098-71-9) mit folgender der Struktur basiert:

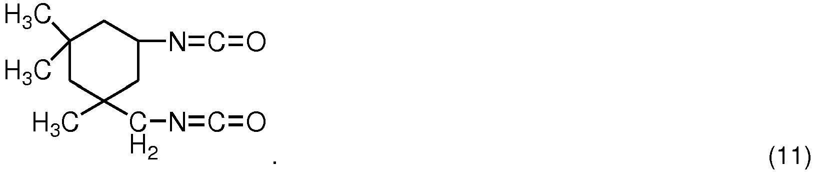

Ein im obigen Sinne geeignetes Isophorondiisocyanat ist z.B. mit dem IPDI-Trimerista Desmodur® Z 4470 MPA/X von Bayer MaterialScience AG, Leverkusen, DE, gegeben, während als Hexandiisocyanat beispielsweise das HDI-Trimerisat Desmodur® N 3300 von Bayer MaterialScience AG, Leverkusen, DE erfolgreich eingesetzt werden kann.

Ferner können auch andere Homologe und/oder Isomere der vorgenannten Diisocyanate zur Bildung des Polyurethans (PUR₃) des Liners 3 und/oder des Polyurethans (PUR₄) des Primers 4 verwendet werden. Alternativ oder in Ergänzung dazu kann das Polyurethan (PUR₃) sowohl des Liners 3 als auch das des Primers 4 auf Basis von aromatischen und/oder aliphatischen monomeren Diisocyanaten, insb. monomerem MDI, HDI, IPDI und/oder TDI, gebildet sein. Darüberhinaus hat es sich zumindest für die Herstellung des Primers 4 als vorteilhaft erwiesen, das Polyurethan (PUR₄) unter Verwendung einer Mischung aus monomerem und homologem Diisocyanat herzustellen, beispielsweise eine solche gemäß der CAS-Nr. 9016-87-9 auf der Basis von Diphenylmethandiisocyanat (MDI).

Zum Herstellen des Primers 4 wird nach einer Weiterbildung der Erfindung zunächst ein fließfähigen, insb. sprüh und/oder streichfähigen, erstes Mehrkomponentensystems (A₄+B₄) gebildet, das Isocynat (A₄), beispielsweise inform von Diisocynat, gemäß einer der vorgenannten Konfigurationen, sowie zwei- oder mehrwertigen Alkohol (B₄) enthält. Falls erforderlich kann, das erste Mehrkomponentensystems zur Beschleunigung des Fertigungsprozesses zudem auch mit einem der vorgenanntentrinkwassertauglichen, Katalysatoren (C₄) versetzt sein. Nach dem Ansetzen wird das erste Mehrkomponentensystems auf eine Innenwand des als Bestandteil des Meßrohrs dienenden metallischen Trägerrohrs, appliziert, beispielsweise aufgestrichen oder aufgesprüht, und daselbst zum Bilden des am Trägerohr 2 haftenden Primers 4 zumindest in Teilen aushärten gelassen. Gemäß einer Ausgestaltung des Verfahrens wird das erste Mehrkomponentensystems (A₄+B₄) dabei unter Berücksichtigung allfälliger Volumenänderungen so auf die Innenwand des Trägerrohrs 2 aufgetragen, daß der Primer 4 schließlich eine Dicke von weniger als 500 µm, insb. weniger als 300 µm aufweist.

Zum Herstellen des Polyurethans (PUR₃) für den Liner 3 wird des weiteren das Isocynat (A₃), insb. Diisocynat, zwei- oder mehrwertigen Alkohol (B₃) sowie einen Katalysator (C₃) enthaltende zweite Mehrkomponentensystem (A₃+B₃+C₃) angemischt. Nachdem der auf der Innenwand des Trägerohrs 2 zunächst gebildete Primer 4 in ausreichendem Maße ausgehärtet ist, wird das zunächst noch fließfähige zweite Mehrkomponentensystem auf den auf der Innenwand des Trägerrohrs 2 gebildeten Primer 4 appliziert und darauf unter Einwirkung des Katalysators (C₃) entsprechend rasch aushärten gelassen, wodurch schließlich der Liner 3 *in-situ* gebildet wird.

Das zweite Mehrkomponentensystem (A₃+B₃+C₃) kann beispielsweise im sogenannten Ribbon-Flow-Verfahren unter Verwendung eines innerhalb des Lumens des Trägerrohrs 2 verfahrbaren Gieß- oder Sprühkopfs auf den bereits auf der Innenwand des Trägerrohrs 2 haftenden Primer 4 aufgetragen werden. Durch gleichzeitiges Rotierenlassen des Trägerrohrs 2 um seine Längsachse und Verfahren des Gieß- oder Sprühkopfs im wesentlichen parallel zur Längsachse kann das flüssige Mehrkomponentensystem (A₃+B₃+C₃) auf sehr einfache sehr und gut reproduzierbare Weise gleichmäßig über die gesamte Innenwand verteilt werden.

Gemäß einer vorteilhaften Ausgestaltung der Erfindung sind Konzentration und Menge des beigegebenen Katalysators (C₃) dabei so bemessen, daß das auf das mit Primer 4 versehene Trägerrohr 2 applizierte Mehrkomponentensystem (A₃+B₃+C₃) innerhalb einer vergleichsweise kurzen Reaktionszeit von weniger als einer Minute, insb. unter 30 Sekunden, und bei einer Verarbeitungstemperatur von weniger als 100°C, beispielsweise bei etwa 25°C, aushärten kann. Experimentelle Untersuchungen haben hierbei beispielsweise ergeben, daß sich, insb. bei Verwendung der oben beschriebene Präpolymere-Systeme (PPG+MDI und/oder PTMEG+MDI), solche kurzen Reaktionszeiten bereits durch Zugabe des Katalysators (C₃) mit einem Masseanteil von weniger als 2% der Gesamtmasse des Mehrkomponentensystems (A₃+B₃+C₃) erreicht werden können. Weiterführenden Untersuchungen haben ferner ergeben, daß sich besonders gute Ergebnisse bei der Herstellung des Liners 3 erzielen lassen, wenn Alkohohl (B₃) und Präpolymer (A₃) für das Polyurethan (PUR₃) des Liners 3 in einem Mischungsverhältnis B:A von etwa 15:100 oder weniger, insb. einem Mischungsverhältnis B:A von weniger als 10:100, zugegeben werden. Für die Herstellung des Polyurethans (PUR3) für den Liner 3 und insoweit auch für dessen Fertigung besonders geeignete Verfahren, insb. auch zur Dosierung des Katalysators, sind im übrigen beispielsweise auch in den eigenen, nicht vorveröffentlichten Patentanmeldungen DE 102005044972.7 bzw. U.S. 60/718,308 beschrieben.

Falls erforderlich, kann das für die Herstellung des Polyurtehans (PUR₃) für den Liner 3 und/oder bei der Herstellung des Polyurethans (PUR₄) für den Primer 4 jeweils verwendete Mehrkomponentensystems ferner mittels einem oder mehreren geeigneten, insb. farbgebender und/oder verstärkender, Füllstoffen gestreckt werden. Als Füllstoff kann beispielsweise eine reaktive Farbe oder eine, z.B. Kohlenstoffpartikel enthaltende oder daraus bestehende, Pigmentfarbe dienen. So hat sich beispielsweise der Einsatz von Schwarzpigment, beispielsweise PRINTEX® F 80, von der Firma Degussa AG, Düsseldorf, DE, hat sich als sehr vorteilhaft für Herstellung von auch trinkwassertauglichen Linern der beschriebenen Art erwiesen. Aber auch die Verwendung von dem reaktiven Farbstoff Reactint® Black X95AB sehr bewährt, wie es derzeit von der Firma Milliken Chemical, Tochterfirma Milliken & Company, Spartanburg, South Carolina, US für die Colorierung von Polyurethanen angeboten wird. Alternativ oder in Ergänzung zu den vorgenannten Füllstoffen können zudem auch Carbonate, insb. Calciumcarbonat, Silikate, wie z.B. Talk, Ton und/oder Glimmer, Kieselerde, Calcium- u. Bariumsulfat, Aluminiumhydroxid, Glasfasern u. -kugeln sowie Holzmehl, Cellulose-zur Herstellung des Polyurtehans (PUR₃) für den Liner 3 und/oder des Polyurethans (PUR₄) für den Primer 4 verwendet werden. Durch geeignete Auswahl an solchen, insb. gleichermaßen trinkwassertauglichen, Füllstoffen hinsichtlich Zusammensetzung und/oder Partikelgröße kann zudem ggf. auch eine weitere Verbesserung der chemisch-biologischen und/oder der mechanischen Eigenschaften, z.B. der Festigkeit oder der Oberflächenhärte etc., des jeweiligen Polyurethans (PUR₃) bzw. (PUR₄) erzielt werden.

Aufgrund der Verwendung von Polyurethan (PUR₃) der vorbeschriebenen Art als Material für den Liner 3 kann das Meßrohr 1 ohne weiteres mit Nennweiten im Bereich zwischen 25 mm und 2000 mm gefertigte werden. Gleichermaßen kann somit, insb. auch unter Anwendung des vorbeschriebenen Ribbon-Flow-Verfahrens für die Herstellung des Liners 3, sichergestellt werden, daß der Liner 3 eine möglichst gleichmäßige Dicke von weniger als 8 mm, insb. weniger als 4 mm aufweist.

Ein weiterer Vorteil des erfindungsgemäßen In-Line-Meßgeräts besteht darin, daß es aufgrund der Verwendung eines Polyurethans (PUR₃) der vorbeschriebenen Art für den Liner 3 und eines Polyurethans (PUR₄) der vorbeschriebenen Art für den Primer 4 sogar die für Anwendungen im Trinkwasserbereich gestellten, insb. auch im Vergleich zu anderen Lebensmittelanwendungen, sehr hohen hygienischen Anforderungen erfüllen kann. Untersuchen haben beispielsweise gezeigt, daß die Migrationsrate (M_{max, TOC}) hinsichtlich des gesamtorganischen Kohlenstoffgehaltes (TOC) unterhalb von 0,25 Milligramm pro Liter und Tag liegen kann, während für die Chlorzehrungsrate (M_{max, Cl}) durchaus Wert von weniger als 0,2 Milligramm pro Liter und Tag erreicht werden können. Insoweit kann das erfindungsgemäße In-Line-Meßgerät beispielsweise auch den mit der zumindest für Deutschland einschlägigen "Leitlinie zur hygienischen Beurteilung von Epoxidharzbeschichtungen im Kontakt mit Trinkwasser" an Ausrüstungsgegenstände im Verteilungsnetz auch in Hauptleitungen und mit dem zumindest für die USA einschlägigen NSF/ANSI Standard 61 an Trinkwassersystemkomponenten gestellten Forderungen genügen. Gleichermaßen kann das In-Line-Meßgerät zudem auch die Forderungen gemäß der Prüfvorschriften zur Trinkwasserzulassung für Großbritannien "Water Regulation Advisory Scheme BS 6920" und/oder für Frankreich "Dossier de Demande d'Acs pour Accesoires" durchaus erfüllen. In-Line-Meßgeräte gemäß der Erfindung mit einem Liner aus Polyurethan können somit durchaus herkömmlicherweise im Trinkwasserbereich eingesetzte oder dafür vorgesehene In-Line-Meßgeräte der beschriebenen Art mit vergleichsweise teurem Liner aus PFA, PTFE, Hartgummi oder dergleichen substituieren.

## Patentansprüche

1. In-Line-Meßgerät, insb. Durchflußmeßgerät, zum Messen eines in einer Rohrleitung strömenden Trinkwassers, welches In-Line-Meßgerät einen, insb. magnetisch-induktiven oder akustischen, Meßaufnehmer mit einem in den Verlauf der Rohrleitung eingefügten, dem Führen des zu messenden Fluids dienenden Meßrohr (1) umfaßt, das mittels eines metallischen, Trägerrohrs (2) sowie mittels eines dieses innen auskleidenden Liners (3) gebildet ist,
- wobei der Liner (3) aus einem für Trinkwasser geeigneten Polyurethan besteht,
- wobei Trägerrohr (2) und Liner (3) unter Zwischenlage eines vermittelnden, ebenfalls für Trinkwasser geeigneten, Primers (4) aneinander haften,
- wobei der Primer aus einem Polyurethan besteht und
- wobei das Polyurethan für den Liner (3) als auch das Polyurethan für den Primer (4) jeweils für sich für die Verwendung im Trinkwasserbereich zugelassen ist,
- wobei sich die Trinkwassereignung durch die Erfüllung der Anforderungen des "NSF/ANSI Standard 61" an Trinkwassersystemkomponenten ergibt.

2. In-Line-Meßgerät nach dem vorherigen Anspruch, wobei das Polyurethan des Liners unter Verwendung eines metall-organische Verbindungen aufweisenden Katalysators hergestellt ist.

3. In-Line-Meßgerät nach dem vorherigen Anspruch,
- wobei mit dem Katalysator in den Liner eingebrachte und dort verbliebene Metalle chemisch, insb. atomisch, und/oder physikalisch an im Liner gebildete Kohlenstoffketten gebunden sind; und/oder
- wobei der für die Herstellung des Polyurethans des Liners verwendete Katalysator Zinn enthält und wobei der Liner organisch, insbesondere aliphatisch, gebundenes Zinn aufweist; und/oder
- wobei der für die Herstellung des Polyurethans des Liners verwendete Katalysator frei von Schwermetallen ist; und/oder
- wobei der für die Herstellung des Polyurethans des Liners verwendete Katalysator frei von Aminen ist.

4. In-Line-Meßgerät nach einem der vorherigen Ansprüche,
- wobei das Polyurethan des Liners aromatische und/oder aliphatische, insb. cycloaliphatische, Verbindungen aufweist; und/oder
- wobei das Polyurethan des Liners, insb. aliphatische, Ether-Gruppen aufweist; und/oder
- wobei das Polyurethan des Liners, insb. aliphatische, Ester-Gruppen aufweist; und/oder
- wobei auch das Polyurethan des Liners unter Verwendung eines metall-organische Verbindungen aufweisenden Katalysators hergestellt ist; und/oder
- wobei der Liner frei von Schwermetallen ist; und/oder
- wobei der Liner frei von Aminen ist; und/oder
- wobei der Liner eine Dicke von weniger als 8 mm, insb. weniger als 4 mm aufweist; und/oder
- wobei der Primer eine Dicke von weniger als 500 µm, insb. weniger als 300 µm aufweist; und/oder
- wobei das Meßrohr eine Nennweite aufweist, die kleiner oder gleich 2000 mm ist; und/oder
- wobei das Meßrohr eine Nennweite aufweist, die größer oder gleich 25 mm ist.

5. In-Line-Meßgerät nach dem vorherigen Anspruch,
- wobei das Polyurethan des Liners mittels wenigstens eines Mehrkomponentensystems hergestellt ist, das auf Basis von aromatischen und/oder aliphatischen Diisocyanaten, sowie zwei- oder mehrwertigem Alkohol gebildet ist; und/oder
- wobei das wenigstens eine Mehrkomponentensystem auf Basis monomerer und/oder präpolymerer und/oder polymerer Isocyanate gebildet ist; und/oder
- wobei das wenigstens eine Mehrkomponentensystem unter Verwendung von Diisocyanaten, insb. von Diphenylmethandiisocyanat (MDI), Hexandiisocyanat (HDI), Toluylendiisocyants (TDI) und/oder Isophorondiisoyanat (IPDI), hergestellt ist.

6. In-Line-Meßgerät nach Anspruch 1, wobei das Polyurethan des Liners und das Polyurethan des Primers unterschiedlich sind.

7. In-Line-Meßgerät nach Anspruch 1, wobei Liners und Primer zumindest anteilig aus gleichem Polyurethan bestehen.

8. In-Line-Meßgerät nach einem der vorherigen Ansprüche,
- wobei sowohl das Polyurethan des Liners als auch das Polyurethan des Primers jeweils für Trinkwasser geeignet ist; und/oder
- wobei das Polyurethan des Primers aromatische und/oder aliphatische, insb. cycloaliphatische, Verbindungen aufweist; und/oder
- wobei das Polyurethan des Primers, insb. aliphatische, Ether-Gruppen aufweist; und/oder
- wobei das Polyurethan des Primers, insb. aliphatische, Ester-Gruppen aufweist; und/oder
- wobei das Polyurethan des Primers unter Verwendung eines metall-organische Verbindungen aufweisenden Katalysators hergestellt ist; und/oder
- wobei das Polyurethan des Liners und das Polyurethan des Primers unter Verwendung des gleichen Katalysators hergestellt sind.

9. In-Line-Meßgerät nach dem vorherigen Anspruch,
- wobei das Polyurethan des Primers mittels wenigstens eines Mehrkomponentensystems hergestellt ist, das auf Basis von aromatischen und/oder aliphatischen Diisocyanaten, sowie zwei- oder mehrwertigem Alkohol gebildet ist; und/oder
- wobei das wenigstens eine Mehrkomponentensystem auf Basis monomerer und/oder präpolymerer und/oder polymerer Isocyanate gebildet ist; und/oder
- wobei das wenigstens eine Mehrkomponentensystem unter Verwendung von Diisocyanaten, insb. von Diphenylmethandiisocyanat (MDI), Hexandiisocyanat (HDI), Toluylendiisocyants (TDI) und/oder Isophorondiisoyanat (IPDI), hergestellt ist; und/oder
- wobei das wenigstens eine Mehrkomponentensystem unter Verwendung von Butandiol hergestellt ist; und/oder
- wobei der Alkohol für das wenigstens eine Mehrkomponentensystem als ein Präpolymer, insb. auf Basis von Rizinusöl, ausgebildet ist; und/oder
- wobei der Primer frei von Schwermetallen ist; und/oder
- wobei der Primer frei von Aminen ist.

10. In-Line-Meßgerät nach einem der vorherigen Ansprüche, wobei der Meßaufnehmer weiters umfaßt:
- eine am Meßrohr (1) angeordnete Magnetkreisanordnung zum Erzeugen und Führen eines magnetischen Feldes, das im strömenden Fluid ein elektrisches Feld induziert, und
- Meßelektroden (31, 32) zum Abgreifen von im strömenden Fluid induzierten elektrischen Spannungen.

11. Verfahren zum Herstellen eines Meßrohrs eines In-Line-Meßgeräts nach einem der vorherigen Ansprüche, welches Verfahren folgende Schritte umfaßt:
- Bilden eines fließfähigen, insb. sprüh und/oder streichfähigen, ersten Mehrkomponentensystems, das Isocyanat, insb. Diisocyanat, sowie einen zwei- oder mehrwertigen Alkohol enthält,
- Applizieren des ersten Mehrkomponentensystems auf eine Innenwand eines als Bestandteil des Meßrohrs dienenden metallischen, Trägerrohrs,
- Aushärtenlassen zumindest von Teilen des ersten Mehrkomponentensystems auf der Innenwand des Trägerrohrs zum Bilden eines am Trägerohr haftenden Primers, wobei ein auf Basis des ersten Mehrkomponentensystem gebildetes Polyurethan für die Verwendung im Trinkwasserbereich zugelassen ist,
- wobei sich die Trinkwassereignung durch die Erfüllung der Anforderungen des "NSF/ANSI Standard 61" an Trinkwassersystemkomponenten ergibt,
- Bilden eines fließfähigen zweiten Mehrkomponentensystems, das Isocyanat, insb. Diisocyanat, einen zwei- oder mehrwertigen Alkohol sowie einen Katalysator enthält, wobei ein auf Basis des zweiten Mehrkomponentensystem gebildetes Polyurethan für die Verwendung im Trinkwasserbereich zugelassen ist,
- wobei sich die Trinkwassereignung durch die Erfüllung der Anforderungen des "NSF/ANSI Standard 61" an Trinkwassersystemkomponenten ergibt,
- Applizieren des zweiten Mehrkomponentensystems auf den auf der Innenwand des Trägerrohrs gebildeten Primer, und
- Aushärtenlassen des zweiten Mehrkomponentensystems im Trägerrohr zum Bilden des Liners.

12. Verfahren nach dem vorherigen Anspruch,
- wobei der Katalysator des zweiten Mehrkomponentensystems, insb. von einem physiologisch unbedenklichen Metall gebildete, metall-organische Verbindungen, insb. zinn-organo Verbindungen, insb. Di-n-octylzinn-Verbindungen, aufweist; und/oder
- wobei es sich bei dem Katalysator des zweiten Mehrkomponentensystems um ein Di-n-octylzinndilaurat und/oder ein Di-n-octylzinndimalinat handelt; und/oder
- wobei das Präpolymer des ersten und/oder des zweiten Mehrkomponentensystems mindestens zwei reaktive NCO-Gruppen aufweist; und/oder
- wobei das Präpolymer des ersten und/oder des zweiten Mehrkomponentensystems aromatische und/oder aliphatische Isocyanat-Gruppen aufweist; und/oder
- wobei das erste und/oder das zweite Mehrkomponentensystem monomeres und/oder präpolymeres und/oder polymeres Isocyanat enthält; und/oder
- wobei das erste und/oder das zweite Mehrkomponentensystems unter Verwendung eines Präpolymers auf Basis von Diisocyanat gebildet ist; und/oder
- wobei das Präpolymer des ersten und/oder des zweiten Mehrkomponentensystems auf der Basis von Diphenylmethandiisocyanat (MDI), Hexandiisocyanat (HDI), Toluylendiisocyants (TDI) und/oder Isophorondiisoyanat (IPDI) gebildet ist; und/oder
- wobei das erste und/oder das zweite Mehrkomponentensystem, insb. aliphatische und/oder aromatische, Ether-Gruppen und/oder, insb. aliphatische und/oder aromatische, Ester-Gruppen aufweist; und/oder
- wobei es sich bei dem Alkohol des ersten und/oder des zweiten Mehrkomponentensystems um ein Diol, insb. ein Butandiol handelt; und/oder
- wobei es sich bei dem Alkohol des ersten und/oder des zweiten Mehrkomponentensystems um ein auf Basis von Rizinusöl gebildetes Präpolymer handelt.

13. Verfahren nach einem der Ansprüche 11 bis 12, wobei auch das erste Mehrkomponentensystem einen, insb. Di-n-octylzinn-Verbindungen aufweisenden, Katalysator enthält.

14. Verfahren nach dem vorherigen Anspruch, wobei der Katalysator des ersten Mehrkomponentensystems, insb. von einem physiologisch unbedenklichen Metall gebildete, metall-organische Verbindungen, insb. zinn-organo Verbindungen, aufweist.

15. Verfahren nach einem der Ansprüche 11 bis 14, durchgeführt bei einer Verarbeitungstemperatur von weniger als 100°C, insb. bei etwa 25°C.

16. Verwenden eines, insb. gemäß dem Verfahren nach einem der Ansprüche 11 bis 15 hergestellten, In-Line-Meßgeräts nach einem der Ansprüche 1 bis 10 zum Messen eines Durchflusses und/oder einer Strömungsgeschwindigkeit von in einer Rohrleitung strömendem Wasser, insb. Trinkwasser.

## Claims

1. Inline measuring device, particularly a flowmeter, designed to measure drinking water flowing through a pipe, wherein said inline measuring device comprises a sensor, particularly an electromagnetic or acoustic sensor, with a measuring tube (1) inserted in the course of the pipe and serving to conduct the fluid to be measured, said measuring tube being made from a metal carrier pipe (2) and a liner (3) that lines the inside of said pipe (3),
- wherein the liner (3) is made from a polyurethane that is suitable for drinking water
- wherein the carrier pipe (2) and the liner (3) adhere to one another via an intermediate layer of primer (4) which is also compatible with drinking water,
- wherein the primer is made from a polyurethane and
- wherein the polyurethane used for the liner (3) and the polyurethane used for the primer (4) and each approved for use in the drinking water sector,
- wherein the suitability for use with drinking water results from compliance with the requirements of the "NSF/ANSI Standard 61" regarding drinking water components.

2. Inline measuring device as claimed in the previous claim, wherein the polyurethane of the liner is produced using a catalyst comprising organometallic compounds.

3. Inline measuring device as claimed in the previous claim,
- wherein metals introduced in the liner, and remaining in the liner, with the catalyst are bound chemically, particularly atomically, and/or physically to carbon chains formed in the liner; and/or
- wherein the catalyst used for the production of the polyurethane of the liner contains tin and wherein the liner features organically, particularly aliphatically, bound tin; and/or
- wherein the catalyst used for the production of the polyurethane of the liner is free from heavy metals; and/or
- wherein the catalyst used for the production of the polyurethane of the liner is free from amines.

4. Inline measuring device as claimed in one of the previous claims,
- wherein the polyurethane of the liner comprises aromatic and/or aliphatic, particularly cycloaliphatic, compounds; and/or
- wherein the polyurethane of the liner comprises ether groups, particularly aliphatic ether groups; and/or
- wherein the polyurethane of the liner comprises ester groups, particularly aliphatic ester groups; and/or
- wherein the polyurethane of the liner is also produced using a catalyst comprising organometallic compounds; and/or
- wherein the liner is free from heavy metals; and/or
- wherein the liner is free from amines; and/or
- wherein the liner has a thickness of less than 8 mm, particularly less than 4 mm; and/or
- wherein the primer has a thickness of less than 500 µm, particularly less than 300 µm; and/or
- wherein the measuring tube has a nominal diameter that is less than or equal to 2000 mm; and/or
- wherein the measuring tube has a nominal diameter that is greater than or equal to 25 mm.

5. Inline measuring device as claimed in the previous claim,
- wherein the polyurethane of the liner is produced using at least one multicomponent system which is formed on the basis of aromatic and/or aliphatic diisocyanates as well as divalent or multivalent alcohol; and/or
- wherein the at least one multicomponent system is made on the basis of monomer and/or prepolymer and/or polymer isocyanates; and/or
- wherein the at least one multicomponent system is produced using diisocyanates, particularly methylene diphenyl diisocyanate (MDI), hexamethylene diisocyanate (HDI), toluene diisocyanate (TDI) and/or isophorone diisocyanate (IPDI).

6. Inline measuring device as claimed in Claim 1, wherein the polyurethane of the liner and the polyurethane of the primer are different.

7. Inline measuring device as claimed in Claim 1, wherein the liner and the primer are made from the same polyurethane at least in part.

8. Inline measuring device as claimed in one of the previous claims,
- wherein both the polyurethane of the liner and the polyurethane of the primer are each suitable for drinking water; and/or
- wherein the polyurethane of the primer has aromatic and/or aliphatic, particularly cycloaliphatic compounds; and/or
- wherein the polyurethane of the primer comprises ether groups, particularly aliphatic ether groups; and/or
- wherein the polyurethane of the primer comprises ester groups, particularly aliphatic ester groups; and/or
- wherein the polyurethane of the primer is produced using a catalyst comprising organometallic compounds; and/or
- wherein the polyurethane of the liner and the polyurethane of the primer are produced using the same catalyst.

9. Inline measuring device as claimed in the previous claim,
- wherein the polyurethane of the primer is produced using at least one multicomponent system which is made on the basis of aromatic and/or aliphatic diisocyanates, as well as divalent or multivalent alcohol; and/or
- wherein the at least one multicomponent system is made on the basis of monomer and/or prepolymer and/or polymer isocyanates; and/or
- wherein the at least one multicomponent system is produced using diisocyanates, particularly methylene diphenyl diisocyanate (MDI), hexamethylene diisocyanate (HDI), toluene diisocyanate (TDI) and/or isophorone diisocyanate (IPDI); and/or
- wherein the at least one multicomponent system is produced using butanediol; and/or
- wherein the alcohol for the at least one multicomponent system is designed as a prepolymer, particularly on the basis of castor oil; and/or
- wherein the primer is free from heavy metals; and/or
- wherein the primer is free from amines.

10. Inline measuring device as claimed in one of the previous claims, wherein the sensor further comprises:
- a magnetic circuit arrangement arranged on the measuring tube (1), for generating and conducting a magnetic field which induces an electrical field in the flowing fluid, and
- measuring electrodes (31, 32) designed to measure electrical voltages induced in the flowing fluid.

11. Procedure designed for the fabrication of a measuring tube of an inline measuring device as claimed in one of the previous claims, said procedure comprising the following steps:
- Formation of a first multicomponent system, which can flow, and particularly can be sprayed or spread, said system containing isocyanate, particularly diisocyanate, as well as a bivalent or multivalent alcohol,
- Application of the first multicomponent system on an interior wall of a metal carrier pipe serving as part of the measuring tube,
- Solidification at least of parts of the first multicomponent system on the interior of the carrier pipe to form a primer adhering to the carrier pipe, wherein a polyurethane formed on the basis of the first multicomponent system is approved for use in the drinking water sector,
- wherein the suitability for use with drinking water results from compliance with the requirements of the "NSF/ANSI Standard 61" regarding drinking water components,
- Formation of a second multicomponent system, which can flow, and which contains isocyanate, particularly diisocyanate, a divalent or multivalent alcohol and a catalyst, wherein a polyurethane formed on the basis of the second multicomponent system is approved for use in the drinking water sector,
- wherein the suitability for use with drinking water results from compliance with the requirements of the "NSF/ANSI Standard 61" regarding drinking water components,
- Application of the second multicomponent system on the primer formed on the interior wall of the carrier pipe, and
- Solidification of the second multicomponent system in the carrier pipe to form the liner.

12. Procedure as claimed in the previous claim,
- wherein the catalyst of the second multicomponent system, particularly made from a physiologically safe metal, particularly has organometallic compounds, particularly organostannic compounds, particularly di-n-octyltin compounds; and/or
- wherein the catalyst of the second multicomponent system is a di-n-octyltin dilaurate and/or a di-n-octyltin dimalinate; and/or
- wherein the prepolymer of the first and/or second multicomponent system has at least two reactive NCO groups; and/or
- wherein the prepolymer of the first and/or second multicomponent system has aromatic and/or aliphatic isocyanate groups; and/or
- wherein the first and/or the second multicomponent system contains monomer and/or prepolymer and/or polymer isocyanate; and/or
- wherein the first and/or the second multicomponent system is made using a prepolymer on the basis of diisocyanate; and/or
- wherein the prepolymer of the first and/or the second multicomponent system is made on the basis of methylene diphenyl diisocyanate (MDI), hexamethylene diisocyanate (HDI), toluene diisocyanate (TDI) and/or isophorone diisocyanate (IPDI); and/or
- wherein the first and/or the second multicomponent system comprises ether groups, particularly aliphatic and/or aromatic ether groups; and/or ester groups, particularly aliphatic and/or aromatic ester groups
- wherein the alcohol of the first and/or of the second multicomponent system is a diol, particularly a butanediol; and/or
- wherein the alcohol of the first and/or of the second multicomponent system is a prepolymer made on the basis of castor oil.

13. Procedure as claimed in one of the Claims 11 to 12, wherein the first multicomponent system also contains a catalyst, particularly one containing di-n-octyltin compounds.

14. Procedure as claimed in the previous claim, wherein the catalyst of the first multicomponent system, particularly made from a physiologically safe metal, comprises organometallic compounds, particularly organostannic compounds.

15. Procedure as claimed in one of the Claims 11 to 14, carried out at a processing temperature of less than 100 °C, particularly of around 25 °C.

16. Use of an inline measuring device as claimed in one of the Claims 1 to 10, particularly produced according to the procedure as claimed in one of the Claims 11 to 15, for the measurement of a flow and/or flow velocity of water, particularly drinking water, flowing through a pipe.

## Revendications

1. Appareil de mesure en ligne, notamment un débitmètre, destiné à la mesure d'une eau potable s'écoulant dans une conduite, lequel appareil de terrain en ligne comprend un capteur, notamment magnéto-inductif ou acoustique, avec un tube de mesure (1) inséré dans le tracé de la conduite, servant à guider le fluide à mesurer, lequel tube de mesure est constitué d'un tube support métallique (2) ainsi que d'une garniture intérieure (3),
- pour lequel la garniture (3) est constituée d'un polyuréthane compatible avec l'eau potable
- pour lequel le tube support (2) et la garniture (3) adhèrent l'un contre l'autre avec l'interposition d'un apprêt (4) également compatible avec l'eau potable,
- la garniture étant constituée d'un polyuréthane et
- le polyuréthane utilisé pour la garniture (3) et le polyuréthane utilisé pour l'apprêt (4) étant tous deux homologués pour une utilisation dans le domaine de l'eau potable,
- pour lequel la compatibilité avec l'eau potable résulte de la conformité aux exigences de la norme "NSF/ANSI 61".

2. Appareil de mesure en ligne selon la revendication précédente, pour lequel le polyuréthane de la garniture est préparé en utilisant un catalyseur comprenant des composants métallo-organiques.

3. Appareil de mesure en ligne selon la revendication précédente,
- pour lequel les métaux introduits dans la garniture et restant dans la garniture avec le catalyseur sont liés chimiquement, notamment atomiquement, et/ou physiquement aux chaînes carbonées formées dans la garniture ; et/ou
- pour lequel le catalyseur utilisé pour la préparation du polyuréthane de la garniture contient de l'étain et pour lequel la garniture comprend organiquement, notamment aliphatiquement, de l'étain lié ; et/ou
- pour lequel le catalyseur utilisé pour la préparation du polyuréthane de la garniture est exempt de métaux lourds ; et/ou
- pour lequel le catalyseur utilisé pour la préparation du polyuréthane de la garniture est exempt d'amines.

4. Appareil de mesure en ligne selon l'une des revendications précédentes,
- pour lequel le polyuréthane de la garniture comprend des composés aromatiques et/ou aliphatiques, notamment cycloaliphatiques ; et/ou
- pour lequel le polyuréthane de la garniture comprend des groupes d'éther, notamment aliphatiques ; et/ou
- pour lequel le polyuréthane de la garniture comprend des groupes d'ester, notamment aliphatiques ; et/ou
- pour lequel le polyuréthane de la garniture est également préparé en utilisant un catalyseur comprenant des composés organo-métalliques ; et/ou
- pour lequel la garniture est exempte de métaux lourds ; et/ou
- pour lequel la garniture est exempte d'amines ; et/ou
- pour lequel la garniture présente une épaisseur inférieure à 8 mm, notamment inférieure à 4 mm ; et/ou
- pour lequel l'apprêt présente une épaisseur inférieure à 500 µm, notamment inférieure à 300 µm ; et/ou
- pour lequel le tube de mesure présente une largeur nominale inférieure ou égale à 2 000 mm ; et/ou
- pour lequel le tube de mesure présente un diamètre nominal supérieur ou égal à 25 mm.

5. Appareil de mesure en ligne selon la revendication précédente,
- pour lequel le polyuréthane de la garniture est préparé au moyen d'au moins un système à plusieurs composants, qui est formé à base de diisocyanates aromatiques et/ou aliphatiques, ainsi que d'alcool dihydrique ou polyhydrique ; et/ou
- pour lequel l'au moins un système à plusieurs composants est formé à base d'isocyanates monomères et/ou prépolymères et/ou polymères ; et/ou
- pour lequel l'au moins un système à plusieurs composants est préparé en utilisant des diisocyanates, notamment du diisocyanate de diphénylméthane (MDI), du diisocyanate d'hexane (HDI), des diisocyanates de toluène (TDI) et/ou du diisocyanate d'isophorone (IPDI).

6. Appareil de mesure en ligne selon la revendication 1, pour lequel le polyuréthane de la garniture et le polyuréthane de l'apprêt sont différents.

7. Appareil de mesure en ligne selon la revendication 1, pour lequel la garniture et l'apprêt sont au moins partiellement constitués du même polyuréthane.

8. Appareil de mesure en ligne selon l'une des revendications précédentes,
- pour lequel le polyuréthane de la garniture et le polyuréthane de l'apprêt sont tous deux compatibles avec l'eau potable ; et/ou
- pour lequel le polyuréthane de l'apprêt comprend des composés aromatiques et/ou aliphatiques, notamment cycloaliphatiques ; et/ou
- pour lequel le polyuréthane de l'apprêt comprend des groupes d'éther, notamment aliphatiques ; et/ou
- pour lequel le polyuréthane de l'apprêt comprend des groupes d'ester, notamment aliphatiques ; et/ou
- pour lequel le polyuréthane de l'apprêt est préparé en utilisant un catalyseur comprenant des composés métallo-organiques ; et/ou
- pour lequel le polyuréthane de la garniture et le polyuréthane de l'apprêt sont préparés en utilisant le même catalyseur.

9. Appareil de mesure en ligne selon la revendication précédente,
- pour lequel le polyuréthane de l'apprêt est préparé au moyen d'au moins un système à plusieurs composants, qui est formé à base de diisocyanates aromatiques et/ou aliphatiques, ainsi que d'alcool dihydrique ou polyhydrique ; et/ou
- pour lequel l'au moins un système à plusieurs composants est formé à base d'isocyanates monomères et/ou prépolymères et/ou polymères ; et/ou
- pour lequel l'au moins un système à plusieurs composants est préparé en utilisant des diisocyanates, notamment du diisocyanate de diphénylméthane (MDI), du diisocyanate d'hexane (HDI), des diisocyanates de toluène (TDI) et/ou du diisocyanate d'isophorone (IPDI) ; et/ou
- pour lequel l'au moins un système à plusieurs composants est préparé en utilisant du butanediol ; et/ou
- pour lequel l'alcool pour l'au moins un système à plusieurs composants se présente sous la forme d'un prépolymère, notamment à base d'huile de ricin ; et/ou
- pour lequel l'apprêt est exempt de métaux lourds ; et/ou
- pour lequel l'apprêt est exempt d'amines.

10. Appareil de mesure en ligne selon l'une des revendications précédentes, pour lequel le capteur comprend en outre :
- un circuit magnétique disposé sur le tube de mesure (1), lequel circuit est destiné à générer et guider un champ magnétique qui induit un champ électrique dans le fluide en écoulement, et
- des électrodes de mesure (31, 32) destinées à prélever les tensions électriques induites dans le fluide en écoulement.

11. Procédé destiné à la fabrication d'un tube de mesure d'un appareil de mesure en ligne selon l'une des revendications précédentes, lequel procédé comprend les étapes suivantes :
- Formation d'un premier système à plusieurs composants fluide, notamment pulvérisable et/ou étalable, contenant un isocyanate, notamment du diisocyanate, ainsi qu'un alcool dihydrique ou polyhydrique,
- Application du premier système à plusieurs composants sur une paroi intérieure d'un tube support métallique servant de composant du tube de mesure,
- Durcissement au moins de parties du premier système à plusieurs composants sur la paroi interne du tube support pour former un primaire adhérant au tube support, un polyuréthane formé sur la base du premier système à plusieurs composants étant homologué pour une utilisation dans le domaine de l'eau potable,
- la compatibilité avec l'eau potable résultant du respect des exigences de la norme "NSF/ANSI Standard 61" pour les composants du système d'eau potable,
- Formation d'un deuxième système à plusieurs composants fluide qui contient un isocyanate, notamment du diisocyanate, un alcool dihydrique ou polyhydrique ainsi qu'un catalyseur, un polyuréthane formé à partir du deuxième système à plusieurs composants étant homologué pour une utilisation dans le domaine de l'eau potable,
- la compatibilité avec l'eau potable résultant du respect des exigences de la norme "NSF/ANSI Standard 61" pour les composants du système d'eau potable,
- Application du deuxième système à plusieurs composants sur l'apprêt formé sur la paroi interne du tube support, et
- Durcissement du deuxième système à plusieurs composants dans le tube support pour la formation de la garniture.

12. Procédé selon la revendication précédente,
- pour lequel le catalyseur du deuxième système à plusieurs composants, comprend des composés métallo-organiques, notamment constitués d'un métal physiologiquement inoffensif, notamment des composants organo-étain, notamment des composés di-n-octylétain, ; et/ou
- pour lequel il s'agit, concernant le catalyseur du deuxième système à plusieurs composants, d'un dilaurate de di-n-octylétain et/ou d'un dimanilate de di-n-octylétain ; et/ou
- pour lequel le prépolymère du premier et/ou du deuxième système à plusieurs composants comprend au moins deux groupes NCO réactifs ; et/ou
- pour lequel le prépolymère du premier et/ou du deuxième système à plusieurs composants comprend des groupes d'isocyanates aromatiques et/ou aliphatiques ; et/ou
- pour lequel le premier et/ou le deuxième système à plusieurs composants contient un isocyanate monomère et/ou prépolymère et/ou polymère ; et/ou
- pour lequel le premier et/ou le deuxième système à plusieurs composants est formé en utilisant un prépolymère à base de diisocyanate ; et/ou
- pour lequel le prépolymère du premier et/ou du second système à plusieurs composants est formé à base de diisocyanate de diphénylméthane (MDI), de diisocyanate d'hexane (HDI), de diisocyanates de toluène (TDI) et/ou de diisocyanate d'isophorone (IPDI) ; et/ou
- pour lequel le premier et/ou le deuxième système à plusieurs composants comprend des groupes d'éther, notamment aliphatiques et/ou aromatiques et/ou des groupes d'ester, notamment aliphatiques et/ou aromatiques; et/ou
- pour lequel il s'agit, concernant l'alcool du premier et/ou du deuxième système à plusieurs composants, d'un diol, notamment d'un butanediol ; et/ou
- pour lequel il s'agit, concernant l'alcool du premier et/ou du deuxième système à plusieurs composants, d'un prépolymère formé à base d'huile de ricin.

13. Procédé selon l'une des revendications 11 à 12, pour lequel le premier système à plusieurs composants contient également un catalyseur, notamment présentant des composés di-n-octylétain.

14. Procédé selon la revendication précédente, pour lequel le catalyseur du premier système à plusieurs composants présente des composés métallo-organiques, notamment constitués d'un métal physiologiquement inoffensif, notamment des composants organo-étain.

15. Procédé selon l'une des revendications 11 à 14, réalisé à une température de traitement de moins de 100 °C, notamment à env. 25 °C.

16. Utilisation d'un appareil de mesure en ligne selon l'une des revendications 1 à 10, notamment fabriqué par le procédé selon l'une des revendications 11 à 15, destiné à la mesure d'un débit et/ou d'une vitesse d'écoulement d'eau, notamment d'eau potable, s'écoulant dans une conduite.
